(19) Europäisches Patentamt
European Patent Office
Office européen des brevets

(11) **EP 4 117 363 A1**

(12) **EUROPEAN PATENT APPLICATION**
published in accordance with Art. 153(4) EPC

(43) Date of publication:
**11.01.2023 Bulletin 2023/02**

(21) Application number: **20924657.8**

(22) Date of filing: **10.03.2020**

(51) International Patent Classification (IPC):
**H04W 72/04** $^{(2009.01)}$

(52) Cooperative Patent Classification (CPC):
**H04W 72/04**

(86) International application number:
**PCT/CN2020/078674**

(87) International publication number:
**WO 2021/179184 (16.09.2021 Gazette 2021/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **CHEN, Wenhong**
**Dongguan, Guangdong 523860 (CN)**
• **SHI, Zhihua**
**Dongguan, Guangdong 523860 (CN)**
• **FANG, Yun**
**Dongguan, Guangdong 523860 (CN)**

(74) Representative: **Ipside**
**7-9 Allées Haussmann**
**33300 Bordeaux Cedex (FR)**

(54) **METHOD FOR DETERMINING UPLINK TRANSMISSION PARAMETER, AND TERMINAL DEVICE**

(57) Provided are a method for determining an uplink transmission parameter, and a terminal device. When a terminal device is not configured with indication information for determining a reference source signal of a sending beam or is not configured with an SRI for determining a power control parameter, different reference source signals or power control parameters can be determined, from among pre-configured parameters, for uplink signals sent to different TRPs, so as to support the uplink signal transmission of different TRPs. The embodiments of the present invention can comprise: when no information for determining a transmission parameter is configured for an uplink signal, a terminal device determining a transmission parameter of the uplink signal according to a control resource set (CORESET) group index associated with the uplink signal, wherein the transmission parameter is a power control parameter or a reference source signal; and the terminal device transmitting the uplink signal according to the transmission parameter.

determining, by the terminal device, a transmission parameter of a PUSCH scheduled by DCI format 0_0 according to a CORESET group index associated with the PUSCH scheduled by the DCI format 0_0, in response to the PUSCH scheduled by the DCI format 0_0 not being configured with information to determine the transmission parameter; the transmission parameter is a power control parameter or a reference source signal — 601

transmitting, by the terminal device, the uplink signal according to the transmission parameter — 602

FIG. 6

**Description**

**TECHNICAL FIELD**

The present disclosure relates to the field of communication technologies, and in particular to a method for determining an uplink transmission parameter, and a terminal device.

**BACKGROUND**

In related art, when a terminal device is not configured with a reference source signal for determining a transmitting beam, the terminal device determines the transmitting beam based on a pre-configured default reference source signal. When the terminal device is not configured with a sounding reference signal resource indicator (SRS resource indicator, SRI) for determining power control parameters, the terminal device determines the transmitting power based on a pre-configured default set of power control parameters. However, in uplink multiple transmission and reception points (TRPs) transmissions, uplink signals sent to different TRPs require different transmitting beam and power control parameters (e.g., path loss). Using only a default reference source signal or only a default set of power control parameters cannot meet the requirements of uplink multi-TRPs transmissions.

**SUMMARY OF THE DISCLOSURE**

The present disclosure provides a method for determining an uplink transmission parameter, and a terminal device. Based on the present disclosure, when the terminal device is not configured with indication information of the reference source signal for determining the transmitting beam or is not configured with the power control parameter for determining the SRI, different reference source signals or power control parameters may be determined from pre-configured parameters for uplink signals sent to different TRPs, thereby supporting uplink signal transmission for different TRPs.

In an aspect, the present disclosure provides a method for determining an uplink transmission parameter, applied to a terminal device and, comprising: determining, by the terminal device, a transmission parameter of an uplink signal according to a control resource set (CORESET) group index associated with the uplink signal, in response to no information to determine the transmission parameter being configured for the uplink signal; wherein the transmission parameter is a power control parameter or a reference source signal; and transmitting, by the terminal device, the uplink signal according to the transmission parameter. Based on the method of the present disclosure, when the terminal device is not configured with indication information of the reference source signal for determining the transmitting beam or is not configured with the power control parameter for determining the SRI, different reference source signals or power control parameters may be determined from pre-configured parameters for uplink signals sent to different TRPs (i.e., associated with different CORESET group indexes), thereby supporting uplink signal transmission for different TRPs.

In another aspect, the present disclosure provides a terminal device, such that when the terminal device is not configured with indication information of the reference source signal for determining the transmitting beam or is not configured with the power control parameter for determining the SRI, different reference source signals or power control parameters may be determined from pre-configured parameters for uplink signals sent to different TRPs, thereby supporting uplink signal transmission for different TRPs. The above function may be implemented by hardware or by hardware executing corresponding software. The hardware or software includes one or more modules corresponding to the above function.

In a further aspect, the present disclosure provides a terminal device including: a processor and a transmitter, the processor and the transmitter being connected by a bus; the processor and the transmitter, each for executing a method as described in a first aspect of embodiments of the present disclosure.

In a further aspect, the present disclosure provides a computer-readable storage medium including an instruction which, when run on a computer, cause the computer to perform the method as described in the first aspect of the present disclosure.

In a further aspect, the present disclosure provides a computer program product including an instruction which, when run on a computer, cause the computer to perform the method as described in the first aspect of the present disclosure.

In a further aspect, the present disclosure provides a chip, the chip coupled to a memory in the terminal device. When running, the chip calls program instructions stored in the memory, causing the terminal device to execute the method as described in the first aspect of the present disclosure.

**BRIEF DESCRIPTION OF THE DRAWINGS**

FIG. 1 is a schematic view of an uplink beam management process based on SRS in the related art.
FIG. 2 is a schematic view of a TCI state configuration method of a PDSCH in the related art.
FIG. 3 is a schematic view of a PUSCH non-coherent transmission based on multiple DCIs in the related art.
FIG. 4 is a schematic view of a SSB burst set period according to an embodiment of the present disclosure.
FIG. 5 is a schematic view of a system architecture according to an embodiment of the present disclosure.
FIG. 6 is a schematic view of a method for determining an uplink transmission parameter according to an embodiment of the present disclosure.
FIG. 7 is a schematic view of a method for determining an uplink transmission parameter according to another embodiment of the present disclosure.
FIG. 8 is a schematic view of a method for determining an uplink transmission parameter according to further another embodiment of the present disclosure.
FIG. 9 is a schematic view of a method for determining an uplink transmission parameter according to further another embodiment of the present disclosure.
FIG. 10 is a schematic view of a method for determining an uplink transmission parameter according to further another embodiment of the present disclosure.
FIG. 11 is a schematic view of a method for determining an uplink transmission parameter according to further another embodiment of the present disclosure.
FIG. 12 is a schematic view of a method for determining an uplink transmission parameter according to further another embodiment of the present disclosure.
FIG. 13 is a schematic view of a terminal device according to an embodiment of the present disclosure.
FIG. 14 is a schematic view of a terminal device according to another embodiment of the present disclosure.

**DETAILED DESCRIPTION**

The following describes the technical solutions in the embodiments of the present disclosure with reference to the accompanying drawings in the embodiments of the present disclosure. Obviously, the described embodiments are only a part of the embodiments of the present disclosure, rather than all the embodiments. Based on the embodiments of the present disclosure, all other embodiments obtained by those skilled in the art without creative work shall fall within the scope of the present disclosure.

The following briefly describes the terms involved in the embodiments of the present disclosure.

(1) Uplink beam management.

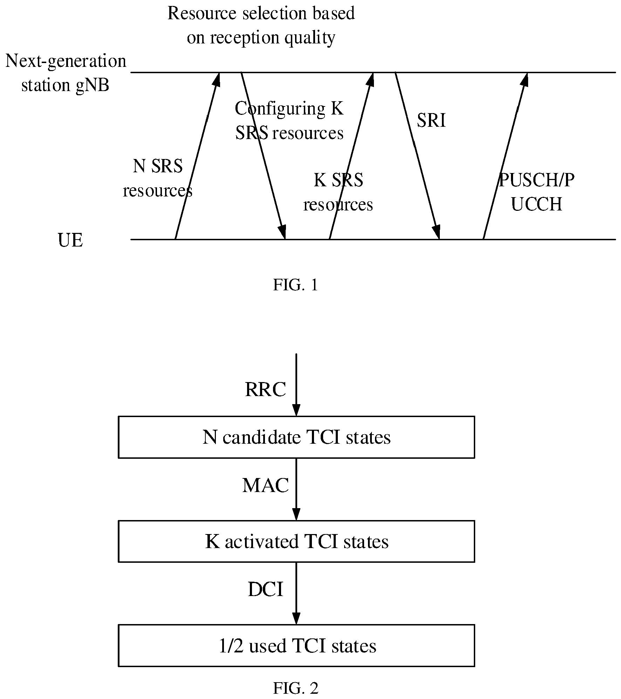

As shown in FIG. 1, FIG. 1 is a schematic view of an uplink beam management process based on SRS in the related art. In New Radio (NR), the terminal device may apply an analog beam to transmit uplink data and uplink control information. The terminal device may perform uplink beam management based on a sounding reference signal (RS) to determine the analog beam for uplink transmission. Specifically, the network device may configure an SRS resource set 1 for the terminal device, and the SRS resource set 1 includes N SRS resources (N>1, N is an integer). The terminal device may apply different beams to transmit the N SRS resources, and the network device measures the reception quality of the N SRS resources respectively and selects K SRS resources with the best reception quality (N>K>1, K is an integer). The network device may further configure a SRS resource set 2, which includes K SRS resources (K> 1, K is an integer), and make the terminal device apply the analog beams used by the K SRS resources selected from the SRS resource set 1 to transmit the K SRS resources in the SRS resource set 2. The above may be achieved by configuring the K SRS resources selected in the SRS resource set 1 as reference SRS resources of the K SRS resources in the SRS resource set 2 respectively. In this case, based on the K SRS resources transmitted by the terminal device in the SRS resource set 2, the network device may select an SRS resource with the best reception quality and notify a sounding reference signal resource indicator (SRI) corresponding to the SRS resource to the terminal device. After receiving the SRI, the terminal device determines the analog beam used by the SRS resource indicated by the SRI as the analog beam applied for transmitting the physical uplink shared channel (PUSCH). For the PUSCH scheduled by downlink control information (DCI), the SRI is indicated through SRI indication domain in the DCI; for the PUSCH scheduled by radio resource control (RRC), the SRI is indicated through a corresponding scheduling signaling. When the DCI configured to schedule the PUSCH is DCI format 0_0, the DCI does not include the SRI, and the terminal device takes the transmitting beam of a physical uplink control channel (PUCCH) with the lowest PUCCH resource identity (ID), among the PUCCHs configured with spatial relation information on an activated carrier on which the PUSCH is located, as the transmitting beam of the PUSCH; in addition, the terminal device takes a path loss measurement reference signal of the PUCCH as a path loss measurement reference signal of the PUSCH.

For PUCCH, a similar method is adopted to indicate the beam applied. Specifically, for each PUCCH resource, multiple PUCCH spatial relation information (PUCCH-spatialrelationinfo) is configured in an RRC signaling, and a media access control (MAC) layer signaling is used to indicate the currently applied PUCCH- spatialrelationinfo. Among them, each PUCCH-spatialrelationinfo includes a reference signal configured to determine the transmitting beam of the PUCCH, which may be an SRS or a channel state information reference signal (CSI-RS) or a synchronization signal block (SSB). In some embodiments, the PUCCH-spatialrelationinfo may further include power control parameters corresponding to the PUCCH. For each SRS resource, corresponding spatial relation information (SRS-spatialrelationinfo) may be configured through the RRC signaling, which includes a reference signal configured to determine the transmitting beam of the SRS.

(2) Quasi-Co-location (QCL) indication for downlink signal transmission

As shown in FIG. 2, FIG. 2 is a schematic view of a TCI state configuration method of a PDSCH in the related art. In the NR system, the network device may configure a corresponding transmission configuration indication (TCI) state for each downlink signal or downlink channel, indicating a QCL reference signal corresponding to the target downlink signal or the target downlink channel, such that the terminal device may receive a target downlink signal or target downlink channel based on the QCL reference signal. Each TCI state may include the following configuration information: TCI state ID, configured to identify the TCI state; QCL information 1; QCL information 2.

Among them, each QCL information may include the following information: QCL type configuration, which may be one of: QCL type A, QCL type B, QCL type C, or QCL type D; QCL reference signal configuration, including a cell ID where the reference signal is located, a bandwidth part (BWP) ID, and a reference signal identity (which may be CSI-RS resource ID or SSB index, etc.). The QCL type of at least one of the QCL information 1 and QCL information 2 must be one of type A, type B, and type C, and the QCL type of the other one (if configured) must be type D.

It can be understood that the definitions of different QCL type configurations are as follows.

'QCL-TypeA': {Doppler shift, Doppler spread, average delay, delay spread}
'QCL-TypeB': {Doppler shift, Doppler spread}
'QCL-TypeC': {Doppler shift, average delay}
'QCL-TypeD': {Spatial Rx parameter}

When the network device configures the QCL reference signal of the target downlink channel as a reference SSB or reference CSI-RS resource through the TCI state, and the QCL type is configured as type A, type B, or type C, the terminal device may assume that target large-scale parameters of the target downlink signal are the same as target large-scale parameters of the reference SSB or of the reference CSI-RS resource, thereby applying same receiving parameters for reception. The receiving parameters correspond to the target large-scale parameters, and the target large-scale parameters are determined by the QCL type configuration. Similarly, when the network device configures the QCL reference signal of the target downlink channel as a reference SSB or reference CSI-RS resource through the TCI state, and the QCL type is configured as type D, the terminal device may receive the target downlink signal with the same receiving beam (i.e., Spatial Rx parameter) as that used to receive the reference SSB or reference CSI-RS resource. Generally, the target downlink channel and its reference SSB or reference CSI-RS resource are transmitted by the same TRP or the same panel (antenna panel) or the same beam in the network device. When two downlink signals, or the transmission TRPs of the downlink channels, or the transmission panels, or the transmitting beams are different, different TCI states are usually configured.

For the downlink control channel, the TCI state may be indicated by the RRC signaling or RRC signaling + MAC signaling. For the downlink data channel, the available set of TCI states is indicated by the RRC signaling, and some of the TCI states are activated by the MAC signaling. Finally, one or two of the activated TCI states are indicated by a TCI state indication domain in the DCI, used for the physical downlink shared channel (PDSCH) scheduled by the DCI.

(3) Uplink non-coherent transmission

In the NR system, the downlink and uplink non-coherent transmissions based on multiple TRPs are introduced. A signal tunnel (backhaul) connection between TRPs may be ideal or non-ideal. Under ideal backhaul, TRPs can exchange information quickly and dynamically. Under non-ideal backhaul, only quasi-static information interaction is possible due to the large time delay between TRPs.

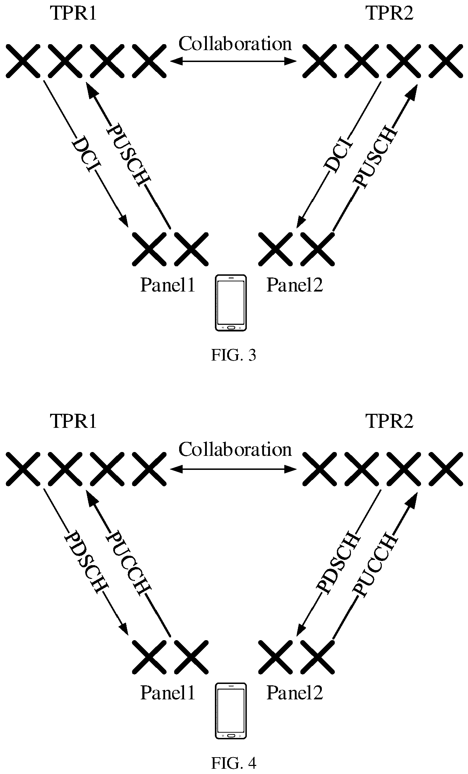

In the uplink non-coherent transmission, different TRPs may independently schedule the PUSCH transmission of the same terminal device. Different PUSCH transmissions may be configured with independent transmission parameters, such as beam, precoding matrix, number of layers, etc. The scheduled PUSCH transmission may be transmitted in the same time slot or in different time slots. When the terminal device is scheduled for two PUSCH transmissions in the same time slot at the same time, the terminal device needs to determine how to perform the transmission according to its own capabilities. When the terminal device is configured with multiple panels and supports simultaneous transmission of PUSCH on multiple panels, these two PUSCHs may be transmitted at the same time, and the PUSCHs transmitted on different panels are aligned with the corresponding TRPs for simulation shaping, thereby distinguishes different PUSCHs by the spatial domain to provide uplink spectrum efficiency. As shown in FIG. 3, FIG. 3 is a schematic view of a PUSCH non-coherent transmission based on multiple DCIs in the related art. When the terminal device includes only a single panel, or does not support simultaneous transmission of multiple panels, the PUSCH can only be transmitted on one panel. Similar to the downlink, the PUSCH transmitted by different TRPs can be scheduled based on multiple DCIs, and these DCIs can be carried by different control resource sets (CORESETs). Specifically, the network device is configured with multiple CORESET groups, and each TRP applies the CORESET in its respective CORESET group for scheduling, that is, different TRPs may be distinguished through the CORESET groups. For example, the network device may configure a CORESET group index for each CORESET, and different indexes correspond to different TRPs. Similarly, in the case of non-ideal backhaul, the terminal device may send control information such as hybrid automatic repeat request acknowledge (HARQ-ACK) to different TRPs through different PUCCHs, and each HARQ-ACK corresponds to the PDSCH sent by the corresponding TRP. As shown in FIG. 4, FIG. 4 is a schematic view of a non-coherent transmission of PUCCH in the related art.

(4) Uplink PUSCH power control

The current transmission power of PUSCH may be calculated by the following formula.

$$P_{\text{PUSCH},b,f,c}(i,j,q_d,l) = \min \begin{cases} P_{\text{CMAX},f,c}(i), \\ P_{\text{O\_PUSCH},b,f,c}(j) + 10\log_{10}(2^\mu \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{cases}$$

Among them, $P_{\text{CMAX},f,c}(i)$ is the maximum transmit power on the current carrier of the terminal device, $i$ is the index of a PUSCH transmission, and $j$ is the index of open-loop power control parameters (including the target power $P_{\text{OPUSCH},b,f,c}(j)$ and path loss factor $\alpha_{b,f,c}(j)$); $q_d$ is the index of the reference signal for path loss measurement and configured to obtain the path loss value $PL_{b,f,c}(q_d)$ which is also an open-loop power control parameter; $f_{b,f,c}(i,l)$ is a closed-loop power control adjustment state, where $l$ is the index of the closed-loop power control adjustment state. The terminal device determines the closed-loop power control adjustment factor according to a TPC command domain sent by the network device. The TPC command domain may be carried by the DCI, configured to schedule the PUSCH, in a search space of the terminal device, or may be carried by a DCI format 2_2, configured to carry a group TPC domain, in a public search space. The closed-loop power control adjustment states corresponding to different closed-loop power control adjustment state indexes are independently calculated, such that different PUSCH transmission powers may be obtained.

In NR, the terminal device determines the transmitting beam of the scheduled PUSCH based on the SRI in the DCI and determines the power control parameters used by the PUSCH based on the SRI. Specifically, the network device configures multiple SRI-PUSCH-PowerControl parameter domains in advance through the RRC signaling, each parameter domain corresponds to an SRI value, and the parameter domain contains a group of PUSCH power control parameter configurations corresponding to the SRI value (for example, j, qd, 1). When the values indicated by the SRI are different, the power control parameter configuration in the corresponding parameter domain (SRI-PUSCH-Power-Control) is applied to determine the transmission power of the currently scheduled PUSCH. When the DCI does not include the SRI, such as the DCI format 0_0, the terminal device applies the power control parameters predefined in the power control parameters configured by the RRC. For example, for the target power and path loss factor, the target power and path loss factor in a parameter set with index 0 in the parameter sets configured by RRC are adopted; for the reference signal for measuring path loss, a path loss reference signal with ID 0 in the path loss reference signals configured by RRC is adopted; for the closed-loop power control adjustment state, the closed-loop power control adjustment state with the index value of 0 is adopted.

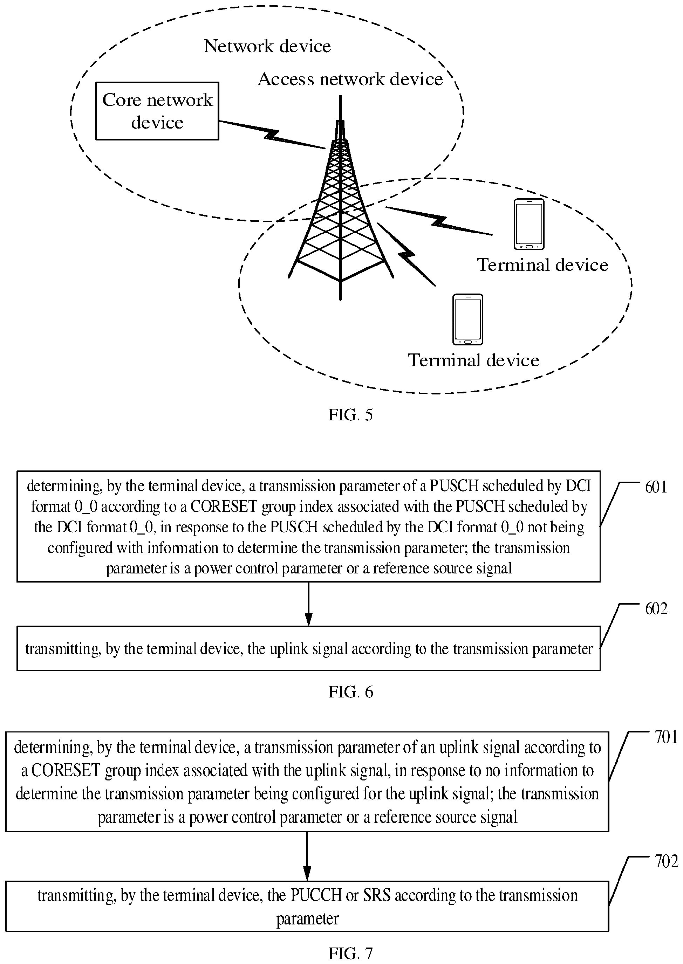

As shown in FIG. 5, FIG. 5 is a schematic view of a system architecture according to an embodiment of the present disclosure. The system architecture may include a network device and a terminal device. The network device may include an access network device and a core network device. That is, the wireless communication system further includes multiple core networks for communicating with the access network device. The access network device may be an evolutionary base station (evolutional node B, eNB or e-NodeB), a macro base station, a micro base station (also known as "small base station"), a pico base station, an access point (AP), a transmission point (TP), or a new generation Node B (gNodeB), etc. in a long-term evolution (LTE) system, a next-generation (mobile communication system) (next radio, NR) system, or an authorized auxiliary access long-term evolution (LAA-LTE) system.

Terminal device may be called user equipment (UE), mobile station (MS), mobile terminal device, smart terminal device, etc., and the terminal device may communicate with one or more core networks via a radio access network (RAN). For example, the terminal device may be a mobile phone (or called a "cellular" phone), a computer with a mobile terminal device, etc. The terminal device may also be a portable, pocket-sized, handheld, computer built-in or vehicle-mounted mobile device, and terminal devices in future NR networks, capable of exchanging voice or data with the radio access network. In the present disclosure, the terminal device may also include a relay, and any device that can the data communication with a base station may be regarded as a terminal device. The present disclosure will be introduced with UE in a general sense.

In the embodiments of the present disclosure, when information to determine the transmission parameters is not configured for the uplink signal, the terminal device determines the transmission parameters of the uplink signal according to the control resource set (CORESET) group index associated with the uplink signal. The transmission parameter is a power control parameter or a reference source signal, and the terminal device transmits the uplink signal according to the transmission parameter. Based on the method of the present disclosure, when the terminal device is not configured with indication information of the reference source signal for determining the transmitting beam or is not configured with the power control parameter for determining the SRI, different reference source signals or power control parameters may be determined from pre-configured parameters for uplink signals sent to different TRPs (i.e., associated with different CORESET group indexes), thereby supporting uplink signal transmission for different TRPs.

The technical solution of the present disclosure will be further introduced by way of embodiments below.

**Embodiment 1: the uplink signal is the PUSCH scheduled by DCI format 0_0.** As shown in FIG. 6, FIG. 6 is a schematic view of a method for determining an uplink transmission parameter according to an embodiment of the present disclosure. The method may include operations at blocks illustrated herein.

At block 601: determining, by the terminal device, a transmission parameter of a PUSCH scheduled by DCI format 0_0 according to a CORESET group index associated with the PUSCH scheduled by the DCI format 0_0, in response to the PUSCH scheduled by the DCI format 0_0 not being configured with information to determine the transmission parameter; the transmission parameter is a power control parameter or a reference source signal. It can be understood that the reference source signal is configured to determine a transmitting beam of the uplink signal.

(1) The transmission parameter is the reference source signal.

When the terminal device does not configure information to determine the transmission parameter for the uplink signal, the terminal device determines the transmission parameter of the uplink signal according to the CORESET group index associated with the uplink signal, which may include: determining, by the terminal device, the reference source signal of the uplink signal according to the CORESET group index associated with the uplink signal, in response to the terminal device not being configured with a physical uplink control channel (PUCCH) resource on an activated BWP that transmits the uplink signal, or in response to the terminal device not being configured with spatial relation information for any PUCCH resource on the activated BWP that transmits the uplink signal. It can be understood that the PUCCH resource or the spatial relation information of the PUCCH resource may be configured to determine the reference source signal of the PUSCH scheduled by the DCI format 0_0.

It can be understood that the terminal device may determine whether to adopt the method in the embodiments according to the RRC signaling of the network device. For example, the method in the embodiments may be adopted only when the terminal device receives a corresponding RRC signaling enableDefaultBeamPlForPUSCH0_0. In an implementation, only when the terminal device has the ability to determine the reference source signal through this method, the terminal device needs to receive the RRC signaling.

In some embodiments, the reference source signal is a reference signal included in a transmission configuration indication (TCI) state of a first CORESET, and the first CORESET is a CORESET with the lowest ID in CORESETs configured with the CORESET group index.

(2) The transmission parameter is the power control parameter, and the power control parameter includes a path loss measurement reference signal.

When the terminal device does not configure information to determine the transmission parameters for the uplink signal, the terminal device determines the transmission parameters of the uplink signal according to the CORESET group index associated with the uplink signal, which may include: determining, by the terminal device, the path loss measurement reference signal of the uplink signal according to the CORESET group index associated with the uplink signal, in response to the terminal device not being configured with a physical uplink control channel (PUCCH) resource

6

on an activated BWP that transmits the uplink signal, or in response to the terminal device not being configured with spatial relation information for any PUCCH resource on the activated BWP that transmits the uplink signal. It can be understood that the PUCCH resource or the spatial relation information of the PUCCH resource may be used to determine the path loss measurement reference signal of the PUSCH scheduled by the DCI format 0_0.

It can be understood that the terminal device may determine whether to adopt the method according to the RRC signaling of the network device. For example, this method may be adopted only when the terminal device receives the RRC signaling enableDefaultBeamPlForPUSCH0_0. In an implementation, only when the terminal device has the ability to determine the path loss measurement reference signal through this method, the terminal device needs to receive the RRC signaling.

In some embodiments, the path loss measurement reference signal is a reference signal included in a TCI state of a first CORESET, and the first CORESET is a CORESET with the lowest ID in CORESETs configured with the CORESET group index.

In some embodiments, in the foregoing implementations of (1) and (2) of the present disclosure, the PUSCH scheduled by the DCI format 0_0 is transmitted in a frequency range 2 (FR2), that is, the implementations are adopted only when the uplink signal can be transmitted in the FR2.

In some embodiments, the determining, by the terminal device, the path loss measurement reference signal of the uplink signal according to the CORESET group index associated with the uplink signal may include: determining, by the terminal device, the path loss measurement reference signal of the uplink signal from a path loss measurement reference signal set pre-configured by a radio resource control (RRC) signaling according to the CORESET group index associated with the uplink signal. It should be noted that in this implementation, the PUSCH scheduled by the DCI format 0_0 is transmitted in a frequency range 1 (FR1), the implementations are adopted only when the PUSCH scheduled by the DCI format 0_0 can be transmitted in the FR1.

In other words, when the PUSCH scheduled by DCI format 0_0 is transmitted in different frequency ranges, different methods may be adopted to determine the path loss measurement reference signal. The frequency range 1 (also called low frequency band) and frequency range 2 (also called high frequency range) are two frequency ranges defined in the agreement, and the frequency point of the frequency range 2 is higher than that of the frequency range 1.

In some embodiments, the determining the path loss measurement reference signal of the uplink signal from a path loss measurement reference signal set pre-configured by a radio resource control (RRC) signaling according to the CORESET group index associated with the uplink signal may include but not limited to the following implementations.

(1) When the CORESET group index associated with the uplink signal is 0, the path loss measurement reference signal with ID 0 in a first path loss measurement reference signal set pre-configured by the RRC signaling is taken as the path loss measurement reference signal of the uplink signal; when the CORESET group index associated with the uplink signal is 1, the path loss measurement reference signal with ID 1 in the first path loss measurement reference signal set pre-configured by the RRC signaling is taken as the path loss measurement reference signal of the uplink signal.

Exemplarily, the network device may pre-configure a path loss measurement reference signal set (referred to as the first path loss measurement reference signal set, for example, a set configured through a RRC parameter PUSCH-PathlossReferenceRS) for the terminal device through RRC signaling. When the CORESET group index is 0, the terminal device takes the path loss measurement reference signal with ID 0 in the first path loss measurement reference signal set (for example, the path loss measurement reference signal corresponding to PUSCH-PathlossReferenceRS-Id=0 in PUSCH-PathlossReferenceRS) as the path loss measurement reference signal of the PUSCH; when the CORESET group index is 1, the terminal device takes the path loss measurement reference signal with ID 1 in the first path loss measurement reference signal set (for example, the path loss measurement reference signal corresponding to PUSCH-PathlossReferenceRS-Id=1 in PUSCH-PathlossReferenceRS) as the path loss measurement reference signal of the PUSCH.

(2) When the CORESET group index associated with the uplink signal is 0, the path loss measurement reference signal with ID 0 in a first path loss measurement reference signal set pre-configured by the RRC signaling is taken as the path loss measurement reference signal of the uplink signal; when the CORESET group index associated with the uplink signal is 1, the path loss measurement reference signal with ID 0 in a second path loss measurement reference signal set pre-configured by the RRC signaling is taken as the path loss measurement reference signal of the uplink signal.

Exemplarily, the network device may pre-configure two path loss measurement reference signal sets (referred to as the first and second path loss measurement reference signal sets, for example, two PUSCH-PathlossReferenceRS through the RRC signaling) for the terminal device through the RRC signaling. When the CORESET group index is 0, the terminal device takes the path loss measurement reference signal with ID 0 in the first path loss measurement reference signal set pre-configured by the RRC signaling (for example, the path loss measurement reference signal corresponding to PUSCH-PathlossReferenceRS-Id=0 in the first PUSCH-PathlossReferenceRS) as the path loss measurement reference signal of the PUSCH; when the CORESET group index is 1, the terminal device takes the path loss measurement reference signal with ID 0 in the second path loss measurement reference signal set pre-configured by the RRC signaling (for example, the path loss measurement reference signal corresponding to PUSCH-PathlossReferenceRS-Id=0 in the second PUSCH-PathlossReferenceRS) as the path loss measurement reference signal of the PUSCH

It should be noted that the transmitting beam of the PUSCH scheduled by DCI format 0_0 may be determined according to the reference signal indicated in the spatial relation information of a PUCCH resource with the lowest PUCCH resource ID on the active BWP where the PUSCH scheduled by DCI format 0_0 is located. The path loss measurement reference signal of the PUSCH scheduled by DCI format 0_0 also reuses the path loss measurement reference signal of the PUCCH resource. Therefore, in the embodiments, the information to determine the transmission parameter may be the PUCCH resource with the lowest PUCCH resource ID on the activated BWP where the PUSCH scheduled by the DCI format 0_0 is located, or the spatial relation information of the PUCCH resource.

In an implementation, the information to determine the transmission parameter is the PUCCH resource with the lowest PUCCH resource ID on the activated BWP where the PUSCH scheduled by the DCI format 0_0 is located. Correspondingly, when no PUCCH resource is configured on the active BWP for transmitting the PUSCH scheduled by the DCI format 0_0, the terminal device determines the transmission parameter of the PUSCH scheduled by the DCI format 0_0 according to the CORESET group index associated with the PUSCH scheduled by the DCI format 0_0. The transmission parameter herein may be a reference source signal or a power control parameter.

In another implementation, the information to determine the transmission parameter is the spatial relation information of the PUCCH resource with the lowest PUCCH resource ID on the activated BWP where the PUSCH scheduled by the DCI format 0_0 is located. Correspondingly, when any PUCCH resource on the activated BWP that transmits the PUSCH scheduled by the DCI format 0_0 are not configured with spatial relation information, the terminal device determines the transmission parameter of the PUSCH scheduled by DCI format 0_0 according to the CORESET group index associated with the PUSCH scheduled by the DCI format 0_0. The transmission parameter herein may be a reference source signal or a power control parameter.

Specifically, the terminal device determines the transmission parameter of the PUSCH scheduled by the DCI format 0_0 according to the CORESET group index associated with the PUSCH scheduled by the DCI format 0_0, which may include: taking, by the terminal device, a reference signal included in a TCI state of a first CORESET as the reference source signal of the PUSCH scheduled by the DCI format 0_0, in response to the transmission parameter being the reference source signal; taking, by the terminal device, a reference signal included in a TCI state of a first CORESET as the path loss measurement reference signal of the PUSCH scheduled by the DCI format 0_0, in response to the transmission parameter being the power control parameter and specifically being the path loss measurement reference signal.

It should be noted that the reference signal included in the TCI state may be SSB or CSI-RS. The path loss measurement reference signal is a downlink reference signal for downlink path loss measurement, which may be SSB or CSI-RS. The network device may configure a CORESET group index (CORESETPoolIndex) and a CORESET ID for each CORESET in advance. Multiple CORESETs may be configured with the same CORESET group index but must be with different CORESET ID s.

In an implementation, the foregoing method may be adopted when the terminal device is in an RRC connected state.

In specific implementation, the CORESET group index associated with the PUSCH scheduled by the DCI format 0_0 may be the CORESET group index of a CORESET where the PDCCH scheduling the PUSCH is located. It can be understood that in other embodiments below, the PUSCH may be determined in terms of the associated CORESET group index in the same manner.

At block 602: transmitting, by the terminal device, the uplink signal according to the transmission parameter.

The terminal device performs the transmission of the PUSCH scheduled by the DCI format 0_0 according to the transmission parameter, which may include, but is not limited to, the following implementations.

(1) The transmission parameter is the power control parameter; the terminal device determines the transmission power of the PUSCH scheduled by the DCI format 0_0 according to the power control parameter; the terminal device transmits the PUSCH scheduled by the DCI format 0_0 with the transmission power. Further, when the power control parameter includes the path loss measurement reference signal, the terminal device performs a downlink path loss measurement according to the path loss measurement reference signal to obtain a downlink path loss measurement result, determines the transmission power of the PUSCH scheduled by the DCI format 0_0 according to the downlink path loss measurement result, and transmits the PUSCH scheduled by the DCI format 0_0 with the determined transmission power.

(2) The transmission parameter is the reference source signal; the terminal device determines the transmitting beam of the PUSCH scheduled by the DCI format 0_0 according to the reference source signal; the terminal device transmits the PUSCH scheduled by the DCI format 0_0 with the transmitting beam.

In the embodiments of the present disclosure, when PUCCH resources are not configured on the BWP for transmitting the PUSCH scheduled by DCI format 0_0, or any PUCCH resource are not configured with spatial relation information, the terminal device may obtain a reference source signal or a path loss measurement reference signal of the PUSCH scheduled by DCI format 0_0 from the TCI state of a CORESET associated with the same CORESET group index as the PUSCH scheduled by DCI format 0_0 (i.e., the PUSCH scheduled by DCI format 0_0 is associated with the same TRP as the CORESET), thereby supporting the transmission of the PUSCH scheduled by DCI format 0_0 with multiple TRPs on a FR2's secondary carrier (sCell, generally without PUCCH configuration).

**Embodiment 2: the uplink signal is PUCCH or SRS.** As shown in FIG. 7, FIG. 7 is a schematic view of a method for determining an uplink transmission parameter according to another embodiment of the present disclosure. The method may include operations at blocks illustrated herein.

At block 701: determining, by the terminal device, a transmission parameter of an uplink signal according to a CORESET group index associated with the uplink signal, in response to no information to determine the transmission parameter being configured for the uplink signal; the transmission parameter is a power control parameter or a reference source signal.

It can be understood that the reference source signal is configured to determine a transmitting beam of the uplink signal.

(1) The transmission parameter is the reference source signal.

When the terminal device does not configure information to determine the transmission parameter for the uplink signal, the terminal device determines the transmission parameter of the uplink signal according to the CORESET group index associated with the uplink signal, which may include: determining, by the terminal device, the reference source signal of the PUCCH according to the CORESET group index associated with the PUCCH, in response to no spatial relation information being configured for the PUCCH; or, determining, by the terminal device, the reference source signal of the SRS according to the CORESET group index associated with the SRS, in response to no spatial relation information being configured for the SRS.

It can be understood that when the PUCCH or SRS is configured with spatial relation information, the terminal device may determine the reference source signal of the PUCCH or SRS according to the spatial relation information.

It can be understood that the terminal device may determine whether to adopt the method in the embodiments according to the RRC signaling of the network device. For example, the method in the embodiments may be adopted only when the terminal device receives an RRC signaling enableDefaultBeamPlForPUCCH, to determine the reference source signal of the PUCCH; the method in the embodiments may be adopted only when the terminal device receives an RRC signaling enableDefaultBeamPlForSRS, to determine the reference source signal of the SRS. In an implementation, only when the terminal device has the ability to determine the reference source signal through this method, the terminal device needs to receive the RRC signaling, and adopt the method in the embodiments after receiving the RRC signaling.

In some embodiments, the reference source signal is a reference signal included in a transmission configuration indication (TCI) state of a first CORESET, and the first CORESET is a CORESET with the lowest ID in CORESETs configured with the CORESET group index.

(2) The transmission parameter is the power control parameter, and the power control parameter includes a path loss measurement reference signal.

When the terminal device does not configure information to determine the transmission parameter for the uplink signal, the terminal device determines the transmission parameter of the uplink signal according to the CORESET group index associated with the uplink signal, which may include: determining, by the terminal device, the path loss measurement reference signal of the PUCCH according to the CORESET group index associated with the PUCCH, in response to no indication information of the path loss measurement reference signal being configured for the PUCCH; or, determining, by the terminal device, the path loss measurement reference signal of the SRS according to the CORESET group index associated with the SRS, in response to no indication information of the path loss measurement reference signal being configured for the SRS.

It can be understood that when the PUCCH or SRS is configured with the indication information of the path loss measurement reference signal, the terminal device may determine the path loss measurement reference signal of the PUCCH or SRS according to the indication information of the path loss measurement reference signal.

It can be understood that the terminal device may determine whether to adopt the method in the embodiments according to the RRC signaling of the network device. For example, the method in the embodiments may be adopted only when the terminal device receives an RRC signaling enableDefaultBeamPlForPUCCH, to determine the path loss measurement reference signal of the PUCCH; the method in the embodiments may be adopted only when the terminal device receives an RRC signaling enableDefaultBeamPlForSRS, to determine the path loss measurement reference signal of the SRS. In an implementation, only when the terminal device has the ability to determine the path loss measurement reference signal through this method, the terminal device needs to receive the RRC signaling.

In some embodiments, the path loss measurement reference signal is a reference signal included in a TCI state of a first CORESET, and the first CORESET is a CORESET with the lowest ID in CORESETs configured with the CORESET group index. In some embodiments, in the foregoing implementations of (1) and (2) of the present disclosure, the PUCCH or SRS is transmitted in a frequency range 2 (FR2).

It should be noted that, in the embodiments, when the transmission parameter is a reference source signal, the information to determine the transmission parameter may be spatial relation information of the PUCCH or SRS, and the spatial relation information is configured to determine the reference source signal of the PUCCH or SRS; when the transmission parameter is a power control parameter, specifically a path loss measurement reference signal, the information to determine the transmission parameter may be indication information of the path loss measurement reference signal configured for the PUCCH or SRS, where the indication information of the path loss measurement reference signal is configured to determine the path loss measurement reference signal of the PUCCH or SRS.

In some embodiments, the transmission parameter is a reference source signal, and the information to determine the transmission parameter is spatial relation information of the PUCCH or SRS. Correspondingly, the terminal device determines the reference source signal of the uplink signal according to the CORESET group index associated with the uplink signal, when no spatial relation information configured for the uplink signal is received. Specifically, the terminal device takes the reference signal included in the TCI state of the first CORESET as the reference source signal of the uplink signal, and the first CORESET is a CORESET with the lowest ID in the CORESETs configured with the CORESET group index.

In other embodiments, the transmission parameter is a path loss measurement reference signal, and the information to determine the transmission parameter is indication information of the path loss measurement reference signal configured for the PUCCH or SRS. Correspondingly, the terminal device determines the path loss measurement reference signal of the uplink signal according to the CORESET group index associated with the uplink signal, when no indication information of the path loss measurement reference signal configured for the uplink signal is received. Specifically, the terminal device takes the reference signal included in the TCI state of the first CORESET as the path loss measurement reference signal of the uplink signal, and the first CORESET is a CORESET with the lowest ID in the CORESETs configured with the CORESET group index.

In an implementation, the foregoing method may be adopted when the PUCCH or SRS is transmitted in the frequency range 2 (FR2). In an implementation, the foregoing method may be adopted when the terminal device is in an RRC connected state.

Implementation manner 1: when the uplink signal is a PUCCH, the CORESET group index associated with the PUCCH may be determined by methods including but not limited to the following.

(1) In a case where the uplink signal is a PUCCH carrying HARQ-ACK, the CORESET group index associated with the uplink signal is a CORESET group index of a CORESET where the PDCCH of the PDSCH corresponding to the scheduled HARQ-ACK is located.

(2) In a case where the uplink signal is a PUCCH carrying CSI, the CORESET group index associated with the uplink signal is a CORESET group index associated with a PUCCH resource of the uplink signal configured by a high-level signaling, or the CORESET group index associated with the uplink signal is a CORESET group index associated with a CSI reporting configuration corresponding to the CSI.

(3) In a case where the uplink signal is a PUCCH carrying SR, the CORESET group index associated with the uplink signal is a CORESET group index associated with a PUCCH resource of the uplink signal configured by a high-level signaling, or the CORESET group index associated with the uplink signal is 0.

It can be understood that in other embodiments below, the PUCCH may be determined in terms of the associated CORESET group index in the same manner.

Implementation manner 2: when the uplink signal is an SRS, the CORESET group index associated with the SRS may be determined by methods including but not limited to the following.

(1) Parameters for configuring the SRS include a parameter indicating the CORESET group index;

(2) When the SRS is a quasi-persistent SRS, the CORESET group index is indicated through a MAC CE configured to activate the SRS.

(3) When the SRS is an aperiodic SRS, the CORESET group index of a CORESET where the DCI configured to trigger the SRS is located is taken as the CORESET group index corresponding to a first SRS resource or a first SRS resource set;

(4) The CORESET group index corresponding to the SRS is determined according to the spatial relation information or the TCI state of the SRS.

It can be understood that in other embodiments below, the SRS may be determined in terms of the associated CORESET group index in the same manner.

At block 702: transmitting, by the terminal device, the PUCCH or SRS according to the transmission parameter.

The transmitting, by the terminal device, the PUCCH or SRS according to the transmission parameter may include implementations as followed.

(1) The transmission parameter is the power control parameter.

The terminal device determines the transmission power of the PUCCH according to the power control parameter; the terminal device transmits the PUCCH with the transmission power. Further, when the power control parameter includes the path loss measurement reference signal, the terminal device performs a downlink path loss measurement according to the path loss measurement reference signal to obtain a downlink path loss measurement result, determines the transmission power of the PUCCH according to the downlink path loss measurement result, and transmits the PUCCH with the determined transmission power.

Or, the terminal device determines the transmission power of the SRS according to the power control parameter; the terminal device transmits the SRS with the transmission power. Further, when the power control parameter includes the path loss measurement reference signal, the terminal device performs a downlink path loss measurement according to the path loss measurement reference signal to obtain a downlink path loss measurement result, determines the transmission power of the SRS according to the downlink path loss measurement result, and transmits the SRS with the determined transmission power.

(2) The transmission parameter is the reference source signal.

The terminal device determines a transmitting beam of the PUCCH according to the reference source signal; the terminal device transmits the PUCCH with the transmitting beam.

Or, the terminal device determines a transmitting beam of the SRS according to the reference source signal; the terminal device transmits the SRS with the transmitting beam.

In the embodiments of the present disclosure, before the terminal device receives the spatial relation information or the indication information of path loss measurement reference signal of the PUCCH/SRS configured by the network, the terminal device may obtain a reference source signal or a path loss measurement reference signal of the PUCCH/SRS from the TCI state of a CORESET associated with the same CORESET group index as the PUCCH/SRS (i.e., the PUCCH/SRS is associated with the same TRP as the CORESET), thereby supporting the transmission of the PUCCH/SRS with multiple TRPs on the FR2.

**Embodiment 3: the uplink signal is a PUSCH, the transmission parameter is a power control parameter, and the power control parameter includes a path loss measurement reference signal.**

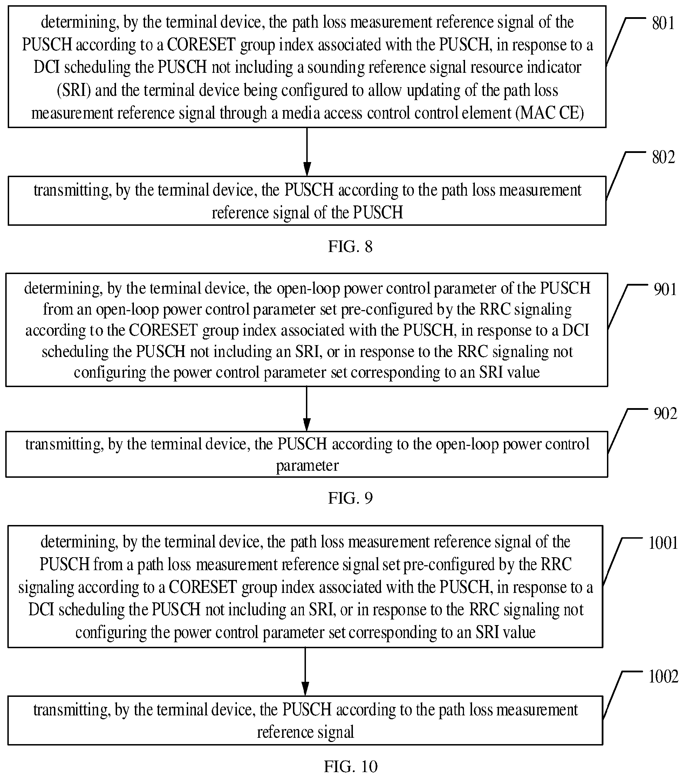

As shown in FIG. 8, FIG. 8 is a schematic view of a method for determining an uplink transmission parameter according to further another embodiment of the present disclosure. The method may include operations at blocks illustrated herein.

At block 801: determining, by the terminal device, the path loss measurement reference signal of the PUSCH according to a CORESET group index associated with the PUSCH, in response to a DCI scheduling the PUSCH not including a sounding reference signal resource indicator (SRI) and the terminal device being configured to allow updating of the path loss measurement reference signal through a media access control control element (MAC CE).

It can be understood that, in a case where the DCI for scheduling the PUSCH includes an SRI, the SRI may be configured to determine the path loss measurement reference signal.

In an implementation, the method in the embodiments may be adopted only when the terminal device receives an RRC signaling enablePLRSupdateForPUSCHSRS, to determine the path loss measurement reference signal, and the signaling is configured to allow the terminal device to receive the MAC CE to update the path loss measurement reference signal. In an implementation, only when the terminal device has the ability to update the path loss measurement reference signal through the MAC CE, the terminal device needs to receive the RRC signaling, such that the method in the embodiments may be adopted. In some embodiments, the terminal device has the ability to update the path loss measurement reference signal through the MAC CE, which means that when the terminal device reports the UE capability, the terminal device indicates that it supports to update the path loss measurement reference signal corresponding to a certain SRI value by a base station sending MAC CE.

When the DCI scheduling the PUSCH does not include SRI, and the terminal device is configured to allow the updating of the path loss measurement reference signal through the MAC CE of the MAC, the terminal device determines the path loss measurement reference signal of the PUSCH according to the CORESET group index associated with the PUSCH, which may include but is not limited to the following implementations.

(1) The terminal device determines a reference SRI value according to the CORESET group index associated with the PUSCH; the terminal device determines the path loss measurement reference signal indicated in a power control parameter set corresponding to the reference SRI value as the path loss measurement reference signal of the PUSCH. In some embodiments, the reference SRI value is equal to the value of the CORESET group index associated with the PUSCH.

Exemplarily, before this method, the terminal device receives an RRC signaling sent by the network device, the RRC signaling indicating a set of correspondences between different SRI values and power control parameter sets. For example, the RRC parameter is SRI-PUSCH-PowerControl, which specifically includes the following parameters.

```
SRI-PUSCH-PowerControl ::=          SEQUENCE {
    sri-PUSCH-PowerControlId            SRI-PUSCH-PowerControlId,
    sri-PUSCH-PathlossReferenceRS-Id    PUSCH-PathlossReferenceRS-Id,
    sri-P0-PUSCH-AlphaSetId             P0-PUSCH-AlphaSetId,
    sri-PUSCH-ClosedLoopIndex           ENUMERATED { i0, i1 }}
```

Among them, sri-PUSCH-PowerControlId is an SRI value (for example, 0-15), sri-PUSCH-PathlossReferenceRS-Id is a path loss measurement reference signal ID corresponding to the SRI value, and sri-P0-PUSCH-AlphaSetId is an open-loop power control parameter ID corresponding to the SRI value, and sri-PUSCH-ClosedLoopIndex is a closed-loop power control adjustment state index corresponding to the SRI value.

In some embodiments, the reference SRI value is equal to the value of the CORESET group index. For example, when the value of the CORESET group index is 0, the reference SRI value is 0, and the terminal device takes the path loss measurement reference signal (the path loss measurement reference signal indicated by sri-PUSCH-PathlossReferenceRS-Id) indicated by the power control parameter set corresponding to the SRI value of 0 (i.e., sri-PUSCH-PowerControlId=0) as the path loss measurement reference signal of the PUSCH; when the value of the CORESET group index is 1, the reference SRI value is 1, and the terminal device takes the path loss measurement reference signal (the path loss measurement reference signal indicated by sri-PUSCH-PathlossReferenceRS-Id) indicated by the power control parameter set corresponding to the SRI value of 0 (i.e., sri-PUSCH-PowerControlId=1) as the path loss measurement reference signal of the PUSCH.

(2) The terminal device determines a correspondence between the SRI value and the power control parameter set according to the CORESET group index associated with the PUSCH; the terminal device determines the path loss measurement reference signal indicated in the power control parameter set corresponding to the SRI value of 0 as the path loss measurement reference signal of the PUSCH, according to the correspondence between the SRI value and the power control parameter set.

Exemplarily, before this method, the terminal device receives an RRC signaling sent by the network device, the RRC signaling indicating two sets of correspondences between different SRI values and power control parameter sets. For example, the RRC signaling includes two RRC parameters SRI-PUSCH-PowerControl, and each RRC parameter is configured to configure a set of correspondences. The same SRI value (sri-PUSCH-PowerControlId) may correspond to different power control parameters in different correspondences (SRI-PUSCH-PowerControl).

In an implementation, when the value of the CORESET group index is 0, the terminal device applies a first correspondence between the SRI value and the power control parameter set (for example, a first SRI-PUSCH-PowerControl); and determines the path loss measurement reference signal (for example, the path loss measurement reference signal indicated by sri-PUSCH-PathlossReferenceRS-Id) indicated in the power control parameter set corresponding to the SRI value of 0 (for example, sri-PUSCH-PowerControlId=0) as the path loss measurement reference signal of the PUSCH, according to the first correspondence. When the value of the CORESET group index is 1, the terminal device applies a second correspondence between the SRI value and the power control parameter set (for example, a second SRI-PUSCH-PowerControl); and determines the path loss measurement reference signal indicated in the power control parameter set corresponding to the SRI value of 0 as the path loss measurement reference signal of the PUSCH, according to the second correspondence.

In an implementation, the PUSCH is a PUSCH scheduled by DCI format 0_1 or DCI format 0_2.

In an implementation, the PUSCH is a dynamically scheduled PUSCH or an RRC-configured PUSCH.

At block 802: transmitting, by the terminal device, the PUSCH according to the path loss measurement reference signal of the PUSCH.

Specifically, the terminal device performs a downlink path loss measurement according to the path loss measurement reference signal to obtain a downlink path loss measurement result, determines the transmission power of the PUSCH according to the downlink path loss measurement result, and transmits the PUSCH with the determined transmission power.

In the embodiments of the present disclosure, when the terminal device supports updating the path loss measurement reference signal through the MAC CE, even if the network device is not configured with SRI, the terminal device may still adopt a preset SRI corresponding to the CORESET group index to update the path loss measurement reference signal corresponding to the preset SRI value through the MAC CE, thereby configuring the path loss reference signal more flexibly. In addition, the method may further support configuring different path loss measurement reference signals for PUSCHs of different TRPs without SRI configuration.

**Embodiment 4: the uplink signal is a PUSCH, and the transmission parameter is a power control parameter, and the power control parameter includes an open-loop power control parameter.**

As shown in FIG. 9, FIG. 9 is a schematic view of a method for determining an uplink transmission parameter according to further another embodiment of the present disclosure. When information to determine the transmission parameter is not configured for the uplink signal, the terminal device determines the transmission parameter of the uplink signal according to the CORESET group index associated with the uplink signal, which may include: determining, by the terminal device, the power control parameter of the PUSCH according to the CORESET group index associated with the PUSCH, in response to a DCI scheduling the PUSCH not including an SRI, or in response to the RRC signaling not configuring a power control parameter set corresponding to an SRI value. Further, the method may further include an operation 901 as followed.

At block 901: determining, by the terminal device, the open-loop power control parameter of the PUSCH from an open-loop power control parameter set pre-configured by the RRC signaling according to the CORESET group index associated with the PUSCH, in response to a DCI scheduling the PUSCH not including an SRI, or in response to the RRC signaling not configuring the power control parameter set corresponding to an SRI value.

It should be noted that the power control parameter set includes the open-loop power control parameter; the open-loop power control parameter includes a target power and/or a path loss factor. In a case where the DCI for scheduling PUSCH includes SRI and the RRC signaling configures the power control parameter set corresponding to the SRI value, the terminal device determines the open-loop power control parameter according to the SRI and the power control parameter set corresponding to the SRI value.

The determining the open-loop power control parameter of the PUSCH from an open-loop power control parameter set pre-configured by the RRC signaling according to CORESET group index associated with the PUSCH may include but is not limited to the following implementations.

(1) When the CORESET group index associated with the PUSCH is 0, the terminal device takes a first group of open-loop power control parameters in a first open-loop power control parameter set pre-configured by the RRC signaling as the open-loop power control parameter of the PUSCH; when the CORESET group index associated with the PUSCH is 1, the terminal device takes a second group of open-loop power control parameters in the first open-loop power control parameter set pre-configured by the RRC signaling as the open-loop power control parameter of the PUSCH.

Exemplarily, the network device may pre-configure an open-loop power control parameter set (referred to as a first open-loop power control parameter set, for example, through an RRC parameter p0-AlphaSets) for the terminal device through RRC signaling. When the CORESET group index is 0, the terminal device takes the first group of open-loop power control parameters in the first open-loop power control parameter set (for example, the first PO-PUSCH-AlphaSet in p0-AlphaSets), as the open-loop power control parameter of the PUSCH; when the CORESET group index is 1, the terminal device sets the second group of open-loop power control parameters in the first open-loop power control parameter set (for example, the second PO-PUSCH-AlphaSet in p0-AlphaSets), as the open-loop power control parameter of the PUSCH.

(2) When the CORESET group index associated with the PUSCH is 0, the terminal device takes a first group of open-loop power control parameters in a first open-loop power control parameter set pre-configured by the RRC signaling as the open-loop power control parameter of the PUSCH; when the CORESET group index associated with the PUSCH is 1, the terminal device takes a first group of open-loop power control parameters in a second open-loop power control parameter set pre-configured by the RRC signaling as the open-loop power control parameter of the PUSCH.

Exemplarily, the network device may pre-configure two open-loop power control parameter sets (referred to as first and second open-loop power control parameter sets, for example, configuring two p0-AlphaSets through RRC signaling) for the terminal device through the RRC signaling. When the CORESET group index is 0, the terminal device takes the first group of open-loop power control parameters (for example, the first PO-PUSCH-AlphaSet in the first p0-AlphaSets) in the first open-loop power control parameter set (for example, the first p0-AlphaSets configured by RRC) pre-configured by the RRC signaling as the open-loop power control parameter of the PUSCH; when the CORESET group index is 1, the terminal device the terminal device takes the first group of open-loop power control parameters (for example, the first PO-PUSCH-AlphaSet in the second p0-AlphaSets) in second first open-loop power control parameter set (for example, the second p0-AlphaSets configured by RRC) pre-configured by the RRC signaling as the open-loop power control parameter of the PUSCH.

In some embodiments, the PUSCH may be a PUSCH scheduled by DCI format 0_0, or a PUSCH scheduled by DCI format 0_1 or DCI format 0_2 that does not include SRI.

At block 902: transmitting, by the terminal device, the PUSCH according to the open-loop power control parameter.

Specifically, the terminal device determines the transmission power of the PUSCH according to the open-loop power control parameter and transmits the PUSCH with the determined transmission power.

In the embodiments of the present disclosure, based on this method, when the network device is not configured with SRI, or the correspondence between SRI and open-loop power control parameter is not configured, the terminal device may still determine different open-loop power control parameters for the PUSCHs associated with different CORESET group indexes from the open-loop power control parameter set pre-configured by the RRC signaling, thereby determining respectively independent open-loop power control parameters for the PUSCHs sent to different TRPs.

**Embodiment 5: the uplink signal is a PUSCH, and the transmission parameter is a power control parameter, and the power control parameter includes a path loss measurement reference signal.**

As shown in FIG. 10, FIG. 10 is a schematic view of a method for determining an uplink transmission parameter according to further another embodiment of the present disclosure. When information to determine the transmission parameter is not configured for the uplink signal, the terminal device determines the transmission parameter of the uplink signal according to the CORESET group index associated with the uplink signal, which may include: determining, by the terminal device, the power control parameter of the PUSCH according to the CORESET group index associated with the PUSCH, in response to a DCI scheduling the PUSCH not including an SRI, or in response to the RRC signaling not configuring a power control parameter set corresponding to an SRI value. Further, the method may further include an operation 1001 as followed.

At block 1001: determining, by the terminal device, the path loss measurement reference signal of the PUSCH from a path loss measurement reference signal set pre-configured by the RRC signaling according to a CORESET group index associated with the PUSCH, in response to a DCI scheduling the PUSCH not including an SRI, or in response to the RRC signaling not configuring the power control parameter set corresponding to an SRI value.

The determining, by the terminal device, the path loss measurement reference signal of the PUSCH from a path loss measurement reference signal set pre-configured by the RRC signaling according to CORESET group index associated with the PUSCH may include but is not limited to the following implementations.

(1) When the CORESET group index associated with the PUSCH is 0, the terminal device takes the path loss measurement reference signal with ID 0 in a first path loss measurement reference signal set pre-configured by the RRC signaling as the path loss measurement reference signal of the PUSCH; when the CORESET group index associated with the PUSCH is 1, the terminal device takes the path loss measurement reference signal with ID 1 in the first path loss measurement reference signal set pre-configured by the RRC signaling as the path loss measurement reference signal of the PUSCH.

(2) When the CORESET group index associated with the PUSCH is 0, the terminal device takes the path loss measurement reference signal with ID 0 in a first path loss measurement reference signal set pre-configured by the RRC signaling as the path loss measurement reference signal of the PUSCH; when the CORESET group index associated with the PUSCH is 1, the terminal device takes the path loss measurement reference signal with ID 0 in a second path loss measurement reference signal set pre-configured by the RRC signaling as the path loss measurement reference signal of the PUSCH.

Exemplarily, the uplink signal may be a PUSCH scheduled by DCI format 0_1 or DCI format 0_2, when the DCI for scheduling the PUSCH does not include an SRI, or when the RRC signaling does not configure the power control parameter set corresponding to the SRI value (the power control parameter set contains indication information of the path loss measurement reference signal), the path loss measurement reference signal of the PUSCH may be determined from the path loss measurement reference signal set pre-configured by the RRC signaling according to the CORESET group index associated with the PUSCH.

It can be understood that when the DCI scheduling the PUSCH includes the SRI and the RRC signaling configures the power control parameter set corresponding to the SRI value, the terminal device determines the path loss measurement reference signal according to the SRI and the power control parameter set corresponding to the SRI value.

Specifically, the network device may pre-configure a path loss measurement reference signal set for the terminal device through the RRC signaling (referred to as a first path loss measurement reference signal set, for example, a set configured through the an RRC parameter PUSCH-PathlossReferenceRS). When the CORESET group index is 0, the terminal device takes the path loss measurement reference signal with ID 0 in the first path loss measurement reference signal set (for example, the path loss measurement reference signal corresponding to PUSCH-PathlossReferenceRS-Id=0 in PUSCH-PathlossReferenceRS), as the path loss measurement reference signal of the PUSCH; when the CORESET group index is 1, the terminal device takes the path loss measurement reference signal with ID 1 in the first path loss measurement reference signal set (for example, the path loss measurement reference signal corresponding to PUSCH-PathlossReferenceRS-Id=1 in PUSCH-PathlossReferenceRS), as the path loss measurement reference signal of the PUSCH.

Specifically, the network device may pre-configure two path loss measurement reference signal sets (referred to as first and second path loss measurement reference signal sets, for example, configuring two PUSCH-PathlossReferenceRS through RRC signaling) for the terminal device through the RRC signaling. When the CORESET group index is 0, the terminal device takes the path loss measurement reference signal with ID 0 (for example, the path loss measurement reference signal corresponding to PUSCH-PathlossReferenceRS-Id=0 in the first PUSCH-PathlossReferenceRS) in the first path loss measurement reference signal set pre-configured by the RRC signaling, as the path loss measurement reference signal of the PUSCH; when the CORESET group index is 1, the terminal device takes the path loss measurement reference signal with ID 0 (for example, the path loss measurement reference signal corresponding to PUSCH-PathlossReferenceRS-Id=0 in the second PUSCH-PathlossReferenceRS) in the second path loss measurement reference signal set pre-configured by the RRC signaling, as the path loss measurement reference signal of the PUSCH.

In some embodiments, this method may be applied for a terminal device that is not allowed to update the path loss measurement reference signal through the MAC CE, or for a terminal device that does not have the ability to update the path loss measurement reference signal through the MAC CE. For example, the method in the embodiments may be adopted only when the terminal device does not receive the RRC signaling enablePLRSupdateForPUSCHSRS, or does not report the ability to update the path loss measurement reference signal through MAC CE. The RRC signaling is configured to allow the terminal device to update the path loss measurement reference signal by receiving the MAC CE.

At block 1002: transmitting, by the terminal device, the PUSCH according to the path loss measurement reference signal.

Specifically, the terminal device performs downlink path loss measurement according to the path loss measurement reference signal to obtain a downlink path loss measurement result, determines the transmission power of the PUSCH according to the downlink path loss measurement result, and transmits the PUSCH with the determined transmission power.

In the embodiments of the present disclosure, based on this method, when the network device is not configured with SRI, or the correspondence between SRI and open-loop power control parameters is not configured, the terminal device may still determine different path loss measurement reference signals for PUSCHs associated with different CORESET group indexes from the path loss measurement reference signal set pre-configured by the RRC signaling, thereby determining respectively independent path loss measurement reference signals for PUSCHs sent to different TRPs for more accurate path loss measurements.

**Embodiment 6: the uplink signal is a PUSCH, the transmission parameter is a power control parameter, and the power control parameter includes a closed-loop power control adjustment state.**

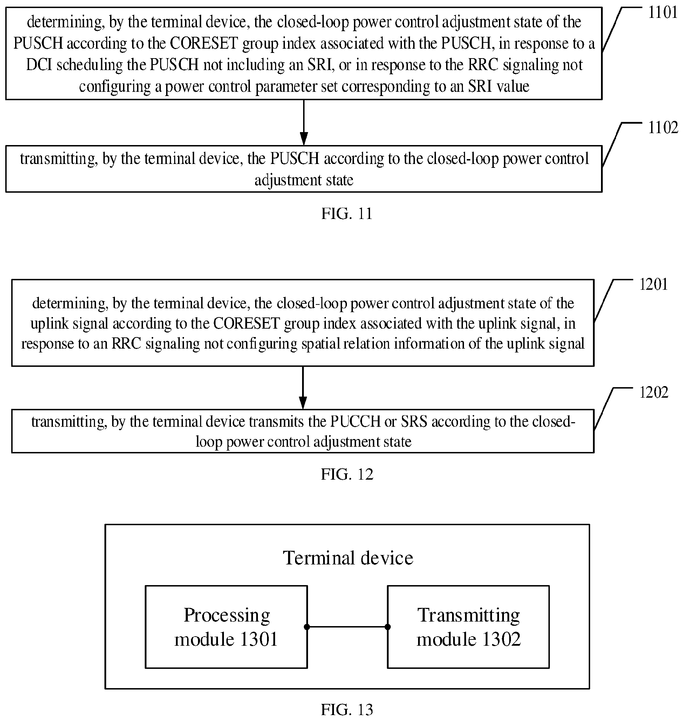

As shown in FIG. 11, FIG. 11 is a schematic view of a method for determining an uplink transmission parameter according to further another embodiment of the present disclosure. When the DCI scheduling the PUSCH does not include an SRI, or when the RRC signaling does not configure the power control parameter set corresponding to the SRI value, the terminal device determines the power control parameter of the PUSCH according to the CORESET group index associated with the PUSCH. Further, the method may further include an operation 1101 as followed.

At block 1101: determining, by the terminal device, the closed-loop power control adjustment state of the PUSCH according to the CORESET group index associated with the PUSCH, in response to a DCI scheduling the PUSCH not including an SRI, or in response to the RRC signaling not configuring a power control parameter set corresponding to an SRI value.

It should be noted that the power control parameter set includes a closed-loop power control adjustment state index. When the DCI for scheduling PUSCH includes the SRI and the RRC signaling configures the power control parameter set corresponding to the SRI value, the terminal device determines the closed-loop power control adjustment state according to the SRI and the power control parameter set corresponding to the SRI value. The terminal device determines the power control parameter of the PUSCH according to the CORESET group index associated with the PUSCH, which may include but is not limited to the following implementations.

When the CORESET group index associated with the PUSCH is 0, it is determined that the index of the closed-loop power control adjustment state of the PUSCH is 0; when the CORESET group index associated with the PUSCH is 1, it is determined that the index of the closed-loop power control adjustment state of the PUSCH is 1.

In some embodiments, the PUSCH may be a PUSCH scheduled by DCI format 0_0, or a PUSCH scheduled by DCI format 0_1 or DCI format 0_2 that does not include SRI.

At block 1102: transmitting, by the terminal device, the PUSCH according to the closed-loop power control adjustment state.

Specifically, the terminal device determines the transmission power of the PUSCH according to the closed-loop power control adjustment state, and transmits the PUSCH with the determined transmission power.

In the embodiments of the present disclosure, based on this method, when the network device is not configured with SRI, or the correspondence between SRI and open-loop power control parameters is not configured, the terminal device may still determine different closed-loop power control adjustment states for PUSCHs associated with different CORESET group indexes, thereby determining respectively independent closed-loop power control adjustment states for PUSCHs sent to different TRPs for more accurate closed-loop power control adjustments.

**Embodiment 7: the uplink signal is a PUCCH or an SRS, the transmission parameter is a power control parameter, and the power control parameter includes a closed-loop power control adjustment state.**

As shown in FIG. 12, FIG. 12 is a schematic view of a method for determining an uplink transmission parameter according to further another embodiment of the present disclosure.

At block 1201: determining, by the terminal device, the closed-loop power control adjustment state of the uplink signal according to the CORESET group index associated with the uplink signal, in response to an RRC signaling not configuring spatial relation information of the uplink signal.

It can be understood that the spatial relation information includes indication information of the closed-loop power control adjustment state. For example, for PUCCH, the spatial relation information is PUCCH-spatialrelationinfo. For SRS, the spatial relation information is SRS-spatialrelationinfo. When the spatial relation information is configured, the terminal device determines the closed-loop power control adjustment state according to the spatial relation information.

The terminal device determines the closed-loop power control adjustment state of the uplink signal according to the CORESET group index associated with the uplink signal, which may include but is not limited to the following implementations.

When the CORESET group index of the uplink signal is 0, it is determined that the index of the closed-loop power control adjustment state of the uplink signal is 0; when the CORESET group index of the uplink signal is 1, it is determined that the index of the closed-loop power control adjustment state of the uplink signal is 1.

At block 1202: transmitting, by the terminal device transmits the PUCCH or SRS according to the closed-loop power control adjustment state.

Specifically, the terminal device determines the transmission power of the PUCCH according to the closed-loop power control adjustment state, and transmits the PUCCH with the determined transmission power. Alternatively, the terminal device determines the transmission power of the SRS according to the closed-loop power control adjustment state, and transmits the SRS with the determined transmission power.

In the embodiments of the present disclosure, when the network device does not configure spatial relation information for the PUCCH or SRS, the terminal device may still determine different closed-loop power control adjustment states for PUCCH or SRS associated with different CORESET group indexes, such that the PUCCH or SRS sent to different TRPs may determine respectively independent closed-loop power control adjustment states for more accurate closed-loop power control adjustments.

As shown in FIG. 13, FIG. 13 is a schematic view of a terminal device according to an embodiment of the present disclosure. The terminal device may include components as followed.

A processing module 1301, configured to determine a transmission parameter of an uplink signal according to a CORESET group index associated with the uplink signal, in response to no information to determine the transmission parameter being configured for the uplink signal; the transmission parameter is a power control parameter or a reference source signal.

A transmitting module 1302, configured to transmit the uplink signal according to the transmission parameter.

In some embodiments, the uplink signal is a physical uplink shared channel (PUSCH) scheduled by downlink control information (DCI) format 0_0, and the transmission parameter is the reference source signal.

The processing module 1301 is specifically configured to determine the reference source signal of the uplink signal according to the CORESET group index associated with the uplink signal, in response to no physical uplink control channel (PUCCH) resource being configured on an activated BWP that transmits the uplink signal, or in response to no spatial relation information being configured for any PUCCH resource on the activated BWP that transmits the uplink signal.

In some embodiments, the uplink signal is a PUCCH or a sounding reference signal (SRS), and the transmission parameter is the reference source signal.

The processing module 1301 is specifically configured to determine the reference source signal of the PUCCH according to the CORESET group index associated with the PUCCH, in response to no spatial relation information being configured for the PUCCH.

Or, the processing module 1301 is specifically configured to determine the reference source signal of the SRS according to the CORESET group index associated with the SRS, in response to no spatial relation information being configured for the SRS.

In some embodiments, the reference source signal is a reference signal included in a transmission configuration indication (TCI) state of a first CORESET, and the first CORESET is a CORESET with the lowest ID in CORESETs configured with the CORESET group index.

In some embodiments, the uplink signal is a PUSCH scheduled with DCI format 0_0, the transmission parameter is the power control parameter, and the power control parameter includes a path loss measurement reference signal.

The processing module 1301 is specifically configured to determine the path loss measurement reference signal of the uplink signal according to the CORESET group index associated with the uplink signal, in response to the terminal device not being configured with a physical uplink control channel (PUCCH) resource on an activated BWP that transmits the uplink signal, or in response to the terminal device not being configured with spatial relation information for any PUCCH resource on the activated BWP that transmits the uplink signal.

In some embodiments, the uplink signal is a PUCCH or SRS, the transmission parameter is the power control parameter, and the power control parameter includes a path loss measurement reference signal.

The processing module 1301 is specifically configured to determine the path loss measurement reference signal of the PUCCH according to the CORESET group index associated with the PUCCH, in response to no indication information of the path loss measurement reference signal being configured for the PUCCH.

Or, the processing module 1301 is specifically configured to determine the path loss measurement reference signal of the SRS according to the CORESET group index associated with the SRS, in response to no indication information of the path loss measurement reference signal being configured for the SRS.

In some embodiments, the path loss measurement reference signal is a reference signal included in a TCI state of a first CORESET, and the first CORESET is a CORESET with the lowest ID in CORESETs configured with the CORESET group index.

In some embodiments, the uplink signal is transmitted in a frequency range 2.

In some embodiments, the processing module 1301 is specifically configured to determine the path loss measurement reference signal of the uplink signal from a path loss measurement reference signal set pre-configured by a radio resource control (RRC) signaling according to the CORESET group index associated with the uplink signal.

In some embodiments, the uplink signal is a PUSCH scheduled by DCI format 0_0 and is transmitted in a frequency range 1.

In some embodiments, the processing module 1301 is specifically configured to take the path loss measurement reference signal with ID 0 in a first path loss measurement reference signal set pre-configured by the RRC signaling as the path loss measurement reference signal of the uplink signal, in response to the CORESET group index associated with the uplink signal being 0; and to take the path loss measurement reference signal with ID 1 in the first path loss measurement reference signal set pre-configured by the RRC signaling as the path loss measurement reference signal of the uplink signal, in response to the CORESET group index associated with the uplink signal being 1.

In some embodiments, the processing module 1301 is specifically configured to take the path loss measurement reference signal with ID 0 in a first path loss measurement reference signal set pre-configured by the RRC signaling as the path loss measurement reference signal of the uplink signal, in response to the CORESET group index associated with the uplink signal being 0; and to take the path loss measurement reference signal with ID 0 in a second path loss measurement reference signal set pre-configured by the RRC signaling as the path loss measurement reference signal of the uplink signal, in response to the CORESET group index associated with the uplink signal being 1.

In some embodiments, the uplink signal is a PUSCH, the transmission parameter is the power control parameter, and the power control parameter includes a path loss measurement reference signal.

The processing module 1301 is specifically configured to determine the path loss measurement reference signal of the PUSCH according to a CORESET group index associated with the PUSCH, in response to a DCI scheduling the PUSCH not including a sounding reference signal resource indicator (SRI) and the terminal device being configured to allow updating of the path loss measurement reference signal through a media access control control element (MAC CE).

In some embodiments, the processing module 1301 is specifically configured to determine a reference SRI value according to the CORESET group index associated with the PUSCH; and to determine the path loss measurement reference signal indicated in a power control parameter set corresponding to the reference SRI value as the path loss measurement reference signal of the PUSCH.

In some embodiments, the reference SRI value is equal to the value of the CORESET group index associated with the PUSCH.

In some embodiments, the processing module 1301 is specifically configured to determine a correspondence between the SRI value and the power control parameter set according to the CORESET group index associated with the PUSCH; and to determine the path loss measurement reference signal indicated in the power control parameter set corresponding to the SRI value of 0 as the path loss measurement reference signal of the PUSCH, according to the correspondence.

In some embodiments, the uplink signal is a PUSCH, and the transmission parameter is the power control parameter.

The processing module 1301 is specifically configured to determine the power control parameter of the PUSCH according to a CORESET group index associated with the PUSCH, in response to a DCI scheduling the PUSCH not including an SRI, or in response to an RRC signaling not configuring a power control parameter set corresponding to an SRI value.

In some embodiments, the power control parameter includes: an open-loop power control parameter, and the open-loop power control parameter includes at least one of a target power and a path loss factor.

The processing module 1301 is specifically configured to determine the open-loop power control parameter of the PUSCH from an open-loop power control parameter set pre-configured by the RRC signaling according to the CORESET group index associated with the PUSCH.

In some embodiments, the processing module 1301 is specifically configured to take a first group of open-loop power control parameters in a first open-loop power control parameter set pre-configured by the RRC signaling as the open-loop power control parameter of the PUSCH, in response to the CORESET group index associated with the PUSCH being 0; and to take a second group of open-loop power control parameters in the first open-loop power control parameter set pre-configured by the RRC signaling as the open-loop power control parameter of the PUSCH, in response to the CORESET group index associated with the PUSCH being 1.

In some embodiments, the processing module 1301 is specifically configured to take a first group of open-loop power control parameters in a first open-loop power control parameter set pre-configured by the RRC signaling as the open-loop power control parameter of the PUSCH, in response to the CORESET group index associated with the PUSCH being 0; and to take a first group of open-loop power control parameters in a second open-loop power control parameter set pre-configured by the RRC signaling as the open-loop power control parameter of the PUSCH, in response to the CORESET group index associated with the PUSCH being 1.

In some embodiments, the power control parameter includes a path loss measurement reference signal.

The processing module 1301 is specifically configured to determine the path loss measurement reference signal of the PUSCH from a path loss measurement reference signal set pre-configured by the RRC signaling according to the CORESET group index associated with the PUSCH.

In some embodiments, the processing module 1301 is specifically configured to take the path loss measurement reference signal with ID 0 in a first path loss measurement reference signal set pre-configured by the RRC signaling as the path loss measurement reference signal of the PUSCH, in response to the CORESET group index associated with the PUSCH being 0; and to take the path loss measurement reference signal with ID 1 in the first path loss measurement reference signal set pre-configured by the RRC signaling as the path loss measurement reference signal of the PUSCH, in response to the CORESET group index associated with the PUSCH being 1.

In some embodiments, the processing module 1301 is specifically configured to take the path loss measurement reference signal with ID 0 in a first path loss measurement reference signal set pre-configured by the RRC signaling as the path loss measurement reference signal of the PUSCH, in response to the CORESET group index associated with the PUSCH being 0; and to take the path loss measurement reference signal with ID 0 in a second path loss measurement reference signal set pre-configured by the RRC signaling as the path loss measurement reference signal of the PUSCH, in response to the CORESET group index associated with the PUSCH being 1.

In some embodiments, the power control parameter includes a closed-loop power control adjustment state.

The processing module 1301 is specifically configured to determine that the index of the closed-loop power control adjustment state of the PUSCH is 0, in response to the CORESET group index associated with the PUSCH being 0; and to determine the index of the closed-loop power control adjustment state of the PUSCH is 1, in response to the CORESET group index associated with the PUSCH being 1.

In some embodiments, the uplink signal is a PUCCH or SRS, the transmission parameter is the power control parameter, and the power control parameter includes a closed-loop power control adjustment state.

The processing module 1301 is specifically configured to determine the closed-loop power control adjustment state of the uplink signal according to the CORESET group index associated with the uplink signal, in response to an RRC signaling not configuring spatial relation information of the uplink signal.

In some embodiments, the processing module 1301 is specifically configured to determine that the index of the closed-loop power control adjustment state of the uplink signal is 0, in response to the CORESET group index of the uplink signal being 0; and to determine that the index of the closed-loop power control adjustment state of the uplink signal is 1, in response to the CORESET group index of the uplink signal being 1.

In some embodiments, the transmission parameter is the power control parameter.

The transmitting module 1302 is specifically configured to determine the transmission power of the uplink signal according to the power control parameter; and to transmit the uplink signal with the transmission power.

In some embodiments, the transmission parameter is the reference source signal.

The transmitting module 1302 is specifically configured to determine a transmitting beam of the uplink signal according to the reference source signal; and to transmit the uplink signal with the transmitting beam.

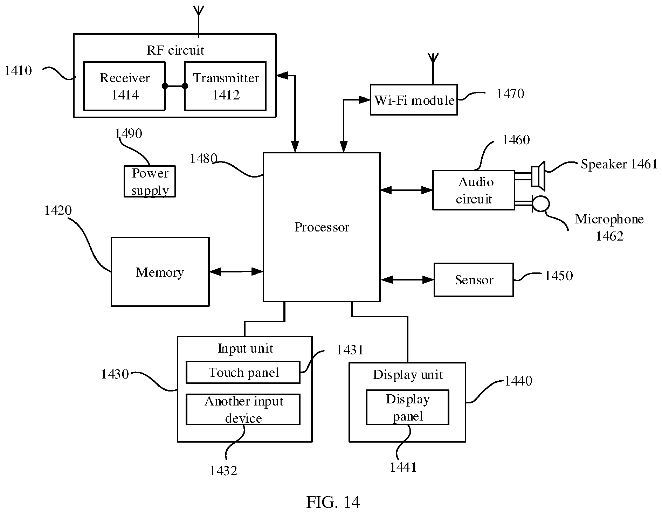

As shown in FIG. 14, FIG. 14 is a schematic view of a terminal device according to another embodiment of the present disclosure. A mobile phone is taken as an example for description, which may include: a radio frequency (RF) circuit 1410, a memory 1420, an input unit 1430, a display unit 1440, a sensor 1450, an audio circuit 1460, a wireless fidelity (Wi-Fi) module 1470, a processor 1480, a power supply 1490, etc. Among them, the radio frequency circuit 1410 includes a receiver 1414 and a transmitter 1412. Those skilled in the art can understand that the structure of the mobile phone shown in FIG. 14 does not constitute a limitation on the mobile phone, and may include more or less components, or a combination of some components, or different component arrangements compared with those shown in the drawing.

The following is a detailed introduction to the various components of the mobile phone in conjunction with FIG. 14.

The RF circuit 1410 may be configured for receiving and sending signals during information transmission or communication; in particular, configured to transfer the downlink information of the base station to the processor 1480 for processing after the downlink information being received; in addition, configured to send designed uplink data to the base station. Generally, the RF circuit 1410 includes, but is not limited to, an antenna, at least one amplifier, a transceiver, a coupler, a low noise amplifier (LNA), a duplexer, etc. In addition, the RF circuit 1410 may communicate with network and other devices through wireless communication. The wireless communication may be adopted with any communication standard or protocol, including but not limited to global system of mobile communication (GSM), general packet radio service (GPRS), code division multiple access (CDMA), wideband code division multiple access (WCDMA), long term evolution (LTE), email, short messaging service (short messaging service, SMS), etc.

The memory 1420 may be configured to store software programs and modules. The processor 1480 executes various functional applications and data processing of the mobile phone by running the software programs and modules stored in the memory 1420. The memory 1420 may mainly include a storage program area and a storage data area. The storage program area may store an operating system, an application program required by at least one function (such as a sound playback function, an image playback function, etc.), etc.; the storage data area may store data (such as audio data, phone book, etc.) created by the use of mobile phones, etc. In addition, the memory 1420 may include a high-speed random access memory, and may also include a non-volatile memory, such as at least one magnetic disk storage device, flash memory device, or other volatile solid-state storage devices.

The input unit 1430 may be configured to receive inputted number or character information, and generate key signal input related to the user settings and function control of the mobile phone. Specifically, the input unit 1430 may include a touch panel 1431 and another input device 1432. The touch panel 1431, also called a touch screen, may collect user touch operations on or near it (for example, the user uses any suitable object or attachment such as a finger, stylus, etc. on or near the touch panel 1431), and drive the corresponding connection device according to the preset program. In some embodiments, the touch panel 1431 may include two parts: a touch detection device and a touch controller. The touch detection device detects the user's touch position, detects the signal caused by the touch operation, and transmits the signal to the touch controller; the touch controller receives the touch information from the touch detection device, converts it into contact coordinates, and sends the contact coordinates to the processor 1480. The touch controller may further receive and execute the commands sent by the processor 1480. In addition, the touch panel 1431 may be implemented in multiple types such as resistive, capacitive, infrared, and surface acoustic wave. In addition to the touch panel 1431, the input unit 1430 may further include the another input device 1432. Specifically, the another input device 1432 may include, but is not limited to, one or more of a physical keyboard, function keys (such as volume control buttons, switch buttons, etc.), a trackball, a mouse, a joystick, etc.

The display unit 1440 may be configured to display information input by the user or information provided to the user and various menus of the mobile phone. The display unit 1440 may include a display panel 1441. In some embodiments, the display panel 1441 may be configured in the form of a liquid crystal display (LCD), an organic light-emitting diode (OLED), etc. Further, the touch panel 1431 may cover the display panel 1441. When the touch panel 1431 detects a touch operation on or near it, the touch panel 1431 transmits the touch operation to the processor 1480 to determine a type of the touch event, and the processor 1480 provides a corresponding visual output on the display panel 1441 based on the type of the touch event. Although in FIG. 14, the touch panel 1431 and the display panel 1441 serve as two independent components to realize the input and input functions of the mobile phone, but in some embodiments, the touch panel 1431 and the display panel 1441 may be integrated to realize the input and output functions of the mobile phone.

The mobile phone may further include at least one sensor 1450, such as a light sensor, a motion sensor, and other sensors. Specifically, the light sensor may include an ambient light sensor and a proximity sensor. The ambient light sensor may adjust the brightness of the display panel 1441 according to the brightness of the ambient light. The proximity sensor may turn off the display panel 1441 and/or backlight when the phone is moved to the ear. As a kind of motion sensor, an accelerometer sensor may detect the magnitude of acceleration in various directions (usually three-axis), and the magnitude and direction of gravity at rest, which may be used for applications that identify the phone's posture (such as horizontal and vertical screen switching, related games, magnetometer posture calibration), vibration recognition-related functions (such as pedometers, tapping), etc.; as for other sensors such as gyroscope, barometer, hygrometer, thermometer, infrared sensor, etc. that the phone can also be configured with, the present disclosure will not repeat herein.

The audio circuit 1460, the speaker 1461, and the microphone 1462 may provide an audio interface between the user and the mobile phone. The audio circuit 1460 may transmit an electrical signal converted from received audio data to the speaker 1461, which is converted into a sound signal for output by the speaker 1461; on the other hand, the microphone 1462 converts the collected sound signal into an electrical signal, which is received by the audio circuit 1460 and converted into audio data, and the audio data is processed by the audio data output processor 1480 and sent via the RF circuit 1410 to, for example, another cell phone, or the audio data is output to the memory 1420 for further processing.

Wi-Fi is a short-distance wireless transmission technology. The mobile phone may enable users to send and receive emails, browse web pages, and access streaming media through the Wi-Fi module 1470, providing the users with wireless broadband Internet access. Although FIG. 14 shows the Wi-Fi module 1470, it can be understood that it is not a necessary component of the mobile phone and may be omitted as needed without changing the essence of the present disclosure.

The processor 1480 is a control center of the mobile phone and connects various parts of the entire mobile phone using various interfaces and lines to perform various functions and process data of the mobile phone by running or executing software programs and/or modules stored in the memory 1420 and by calling data stored in the memory 1420, thereby providing overall monitoring of the mobile phone. In some embodiments, the processor 1480 may include one or more processing units; in further some embodiments, the processor 1480 may integrate an application processor and a modem processor, where the application processor primarily handles the operating system, user interface, and applications, etc., and the modem processor primarily handles wireless communications. It can be understood that the modem processor described above may also not be integrated into the processor 1480.

The mobile phone further includes a power supply 1490 (such as a battery) for supplying power to various components. In some embodiments, the power supply may be logically connected to the processor 1480 through a power management system, such that functions such as charging, discharging, and power consumption management may be managed through the power management system. Although not shown, the mobile phone may further include a camera, a Bluetooth module, etc., which will not be repeated here.

In the embodiments of the present disclosure, the processor 1480 is configured to determine a transmission parameter of an uplink signal according to a CORESET group index associated with the uplink signal, in response to no information to determine the transmission parameter being configured for the uplink signal; the transmission parameter is a power control parameter or a reference source signal.

The transmitter 1412 is configured to transmit the uplink signal according to the transmission parameter.

In some embodiments, the uplink signal is a physical uplink shared channel (PUSCH) scheduled by downlink control information (DCI) format 0_0, and the transmission parameter is the reference source signal.

The processor 1480 is specifically configured to determine the reference source signal of the uplink signal according to the CORESET group index associated with the uplink signal, in response to no physical uplink control channel (PUCCH) resource being configured on an activated BWP that transmits the uplink signal, or in response to no spatial relation information being configured for any PUCCH resource on the activated BWP that transmits the uplink signal.

In some embodiments, the uplink signal is a PUCCH or a sounding reference signal (SRS), and the transmission parameter is the reference source signal.

The processor 1480 is specifically configured to determine the reference source signal of the PUCCH according to the CORESET group index associated with the PUCCH, in response to no spatial relation information being configured for the PUCCH.

Or, the processor 1480 is specifically configured to determine the reference source signal of the SRS according to the CORESET group index associated with the SRS, in response to no spatial relation information being configured for the SRS.

In some embodiments, the reference source signal is a reference signal included in a transmission configuration indication (TCI) state of a first CORESET, and the first CORESET is a CORESET with the lowest ID in CORESETs configured with the CORESET group index.

In some embodiments, the uplink signal is a PUSCH scheduled with DCI format 0_0, the transmission parameter is the power control parameter, and the power control parameter includes a path loss measurement reference signal.

The processor 1480 is specifically configured to determine the path loss measurement reference signal of the uplink signal according to the CORESET group index associated with the uplink signal, in response to the terminal device not being configured with a physical uplink control channel (PUCCH) resource on an activated BWP that transmits the uplink signal, or in response to the terminal device not being configured with spatial relation information for any PUCCH resource on the activated BWP that transmits the uplink signal.

In some embodiments, the uplink signal is a PUCCH or SRS, the transmission parameter is the power control parameter, and the power control parameter includes a path loss measurement reference signal.

The processor 1480 is specifically configured to determine the path loss measurement reference signal of the PUCCH according to the CORESET group index associated with the PUCCH, in response to no indication information of the path loss measurement reference signal being configured for the PUCCH.

Or, the processor 1480 is specifically configured to determine the path loss measurement reference signal of the SRS according to the CORESET group index associated with the SRS, in response to no indication information of the path loss measurement reference signal being configured for the SRS.

In some embodiments, the path loss measurement reference signal is a reference signal included in a TCI state of a first CORESET, and the first CORESET is a CORESET with the lowest ID in CORESETs configured with the CORESET group index.

In some embodiments, the uplink signal is transmitted in a frequency range 2.

In some embodiments, the processor 1480 is specifically configured to determine the path loss measurement reference signal of the uplink signal from a path loss measurement reference signal set pre-configured by a radio resource control (RRC) signaling according to the CORESET group index associated with the uplink signal.

In some embodiments, the uplink signal is a PUSCH scheduled by DCI format 0_0 and is transmitted in a frequency range 1.

In some embodiments, the processor 1480 is specifically configured to take the path loss measurement reference signal with ID 0 in a first path loss measurement reference signal set pre-configured by the RRC signaling as the path loss measurement reference signal of the uplink signal, in response to the CORESET group index associated with the uplink signal being 0; and to take the path loss measurement reference signal with ID 1 in the first path loss measurement reference signal set pre-configured by the RRC signaling as the path loss measurement reference signal of the uplink signal, in response to the CORESET group index associated with the uplink signal being 1.

In some embodiments, the processor 1480 is specifically configured to take the path loss measurement reference signal with ID 0 in a first path loss measurement reference signal set pre-configured by the RRC signaling as the path loss measurement reference signal of the uplink signal, in response to the CORESET group index associated with the uplink signal being 0; and to take the path loss measurement reference signal with ID 0 in a second path loss measurement reference signal set pre-configured by the RRC signaling as the path loss measurement reference signal of the uplink signal, in response to the CORESET group index associated with the uplink signal being 1.

In some embodiments, the uplink signal is a PUSCH, the transmission parameter is the power control parameter, and the power control parameter includes a path loss measurement reference signal.

The processor 1480 is specifically configured to determine the path loss measurement reference signal of the PUSCH according to a CORESET group index associated with the PUSCH, in response to a DCI scheduling the PUSCH not including a sounding reference signal resource indicator (SRI) and the terminal device being configured to allow updating of the path loss measurement reference signal through a media access control control element (MAC CE).

In some embodiments, the processor 1480 is specifically configured to determine a reference SRI value according to the CORESET group index associated with the PUSCH; and to determine the path loss measurement reference signal indicated in a power control parameter set corresponding to the reference SRI value as the path loss measurement reference signal of the PUSCH.

In some embodiments, the reference SRI value is equal to the value of the CORESET group index associated with the PUSCH.

In some embodiments, the processor 1480 is specifically configured to determine a correspondence between the SRI value and the power control parameter set according to the CORESET group index associated with the PUSCH; and to determine the path loss measurement reference signal indicated in the power control parameter set corresponding to the SRI value of 0 as the path loss measurement reference signal of the PUSCH, according to the correspondence.

In some embodiments, the uplink signal is a PUSCH, and the transmission parameter is the power control parameter.

The processor 1480 is specifically configured to determine the power control parameter of the PUSCH according to a CORESET group index associated with the PUSCH, in response to a DCI scheduling the PUSCH not including an SRI, or in response to an RRC signaling not configuring a power control parameter set corresponding to an SRI value.

In some embodiments, the power control parameter includes: an open-loop power control parameter, and the open-loop power control parameter includes at least one of a target power and a path loss factor.

The processor 1480 is specifically configured to determine the open-loop power control parameter of the PUSCH from an open-loop power control parameter set pre-configured by the RRC signaling according to the CORESET group index associated with the PUSCH.

In some embodiments, the processor 1480 is specifically configured to take a first group of open-loop power control parameters in a first open-loop power control parameter set pre-configured by the RRC signaling as the open-loop power control parameter of the PUSCH, in response to the CORESET group index associated with the PUSCH being 0; and to take a second group of open-loop power control parameters in the first open-loop power control parameter set pre-configured by the RRC signaling as the open-loop power control parameter of the PUSCH, in response to the CORESET group index associated with the PUSCH being 1.

In some embodiments, the processor 1480 is specifically configured to take a first group of open-loop power control parameters in a first open-loop power control parameter set pre-configured by the RRC signaling as the open-loop power control parameter of the PUSCH, in response to the CORESET group index associated with the PUSCH being 0; and to take a first group of open-loop power control parameters in a second open-loop power control parameter set pre-configured by the RRC signaling as the open-loop power control parameter of the PUSCH, in response to the CORESET group index associated with the PUSCH being 1.

In some embodiments, the power control parameter includes a path loss measurement reference signal;

The processor 1480 is specifically configured to determine the path loss measurement reference signal of the PUSCH from a path loss measurement reference signal set pre-configured by the RRC signaling according to the CORESET group index associated with the PUSCH.

In some embodiments, the processor 1480 is specifically configured to take the path loss measurement reference signal with ID 0 in a first path loss measurement reference signal set pre-configured by the RRC signaling as the path loss measurement reference signal of the PUSCH, in response to the CORESET group index associated with the PUSCH being 0; and to take the path loss measurement reference signal with ID 1 in the first path loss measurement reference signal set pre-configured by the RRC signaling as the path loss measurement reference signal of the PUSCH, in response to the CORESET group index associated with the PUSCH being 1.

In some embodiments, the processor 1480 is specifically configured to take the path loss measurement reference signal with ID 0 in a first path loss measurement reference signal set pre-configured by the RRC signaling as the path loss measurement reference signal of the PUSCH, in response to the CORESET group index associated with the PUSCH being 0; and to take the path loss measurement reference signal with ID 0 in a second path loss measurement reference signal set pre-configured by the RRC signaling as the path loss measurement reference signal of the PUSCH, in response to the CORESET group index associated with the PUSCH being 1.

In some embodiments, the power control parameter includes a closed-loop power control adjustment state.

The processor 1480 is specifically configured to determine that the index of the closed-loop power control adjustment state of the PUSCH is 0, in response to the CORESET group index associated with the PUSCH being 0; and to determine the index of the closed-loop power control adjustment state of the PUSCH is 1, in response to the CORESET group index associated with the PUSCH being 1.

In some embodiments, the uplink signal is a PUCCH or SRS, the transmission parameter is the power control parameter, and the power control parameter includes a closed-loop power control adjustment state.

The processor 1480 is specifically configured to determine the closed-loop power control adjustment state of the uplink signal according to the CORESET group index associated with the uplink signal, in response to an RRC signaling not configuring spatial relation information of the uplink signal.

In some embodiments, the processor 1480 is specifically configured to determine that the index of the closed-loop power control adjustment state of the uplink signal is 0, in response to the CORESET group index of the uplink signal being 0; and to determine that the index of the closed-loop power control adjustment state of the uplink signal is 1, in response to the CORESET group index of the uplink signal being 1.

In some embodiments, the transmission parameter is the power control parameter.

The transmitter 1412 is specifically configured to determine the transmission power of the uplink signal according to the power control parameter; and to transmit the uplink signal with the transmission power.

In some embodiments, the transmission parameter is the reference source signal.

The transmitter 1412 is specifically configured to determine a transmitting beam of the uplink signal according to the reference source signal; and to transmit the uplink signal with the transmitting beam.

In the above embodiments, implementation may be in whole or in part by software, hardware, firmware, or any combination thereof. When implemented using software, the implementation may be in whole or in part in the form of a computer program product. The computer program product includes one or more computer instructions. Loading and executing the computer program instructions on a computer produces, in whole or in part, a process or function as described in accordance with the embodiments of the present disclosure. The computer may be a general-purpose computer, a specialized computer, a computer network, or other programmable device. The computer instructions may be stored in a computer-readable storage medium or transmitted from one computer-readable storage medium to another computer-readable storage medium, e.g., the computer instructions may be transmitted from one website site, computer, server, or data center to another via wired (e.g., coaxial cable, optical fiber, digital subscriber line (DSL)) or wireless (e.g., infrared, wireless, microwave, etc.) means. The computer-readable storage medium may be any available medium that a computer can apply for storing or a data storage device such as a server, data center, etc. that contains one or more available medium integrated. The available medium may be magnetic medium, (e.g., floppy disk, hard disk, magnetic tape), optical medium (e.g., DVD), or semiconductor medium (e.g., solid state disk (SSD)), etc.

The terms "first", "second", "third", "fourth", etc. (if any) in the description and claims of the present disclosure and the above-mentioned drawings are intended to distinguish similar objects and need not be intended to describe a particular order or sequence. It should be understood that the data so used may be interchangeable where appropriate such that the embodiments described herein may be implemented in an order other than what is illustrated or described herein. In addition, the terms "include" and "have", and any variations thereof, are intended to cover non-exclusive inclusion, e.g., a process, method, system, product, or apparatus including a series of steps or units need not be limited to those steps or units clearly listed, but may include other steps or units not clearly listed or inherent to the process, method, product or apparatus.

**Claims**

1. A method for determining an uplink transmission parameter, comprising:

   determining, by a terminal device, a transmission parameter of an uplink signal according to a control resource set (CORESET) group index associated with the uplink signal, in response to no information to determine the transmission parameter being configured for the uplink signal; wherein the transmission parameter is a power control parameter or a reference source signal; and
   transmitting, by the terminal device, the uplink signal according to the transmission parameter.

2. The method according to claim 1, wherein the uplink signal is a physical uplink shared channel (PUSCH) scheduled by downlink control information (DCI) format 0_0, and the transmission parameter is the reference source signal;
   the determining, by a terminal device, a transmission parameter of an uplink signal according to a control resource set (CORESET) group index associated with the uplink signal, in response to no information to determine the transmission parameter being configured for the uplink signal comprises:
   determining the reference source signal of the uplink signal according to the CORESET group index associated with the uplink signal, in response to no physical uplink control channel (PUCCH) resource being configured on an activated bandwidth part (BWP) that transmits the uplink signal, or in response to no spatial relation information being configured for any PUCCH resource on the activated BWP that transmits the uplink signal.

3. The method according to claim 1, wherein the uplink signal is a physical uplink control channel (PUCCH) or a sounding reference signal (SRS), and the transmission parameter is the reference source signal;
   the determining, by a terminal device, a transmission parameter of an uplink signal according to a control resource set (CORESET) group index associated with the uplink signal, in response to no information to determine the transmission parameter being configured for the uplink signal comprises:

   determining the reference source signal of the PUCCH according to the CORESET group index associated with the PUCCH, in response to no spatial relation information being configured for the PUCCH; or
   determining the reference source signal of the SRS according to the CORESET group index associated with the SRS, in response to no spatial relation information being configured for the SRS.

4. The method according to claim 2 or 3, wherein the reference source signal is a reference signal included in a transmission configuration indication (TCI) state of a first CORESET, and the first CORESET is a CORESET with a lowest identity (ID) in CORESETs configured with the CORESET group index.

5. The method according to claim 1, wherein the uplink signal is a physical uplink shared channel (PUSCH) scheduled by downlink control information (DCI) format 0_0, the transmission parameter is the power control parameter, and the power control parameter comprises a path loss measurement reference signal;
   the determining, by a terminal device, a transmission parameter of an uplink signal according to a control resource set (CORESET) group index associated with the uplink signal, in response to no information to determine the transmission parameter being configured for the uplink signal comprises:
   determining the path loss measurement reference signal of the uplink signal according to the CORESET group index associated with the uplink signal, in response to no physical uplink control channel (PUCCH) resource being configured on an activated bandwidth part (BWP) that transmits the uplink signal, or in response to no spatial relation information being configured for any PUCCH resource on the activated BWP that transmits the uplink signal.

6. The method according to claim 1, wherein the uplink signal is a physical uplink control channel (PUCCH) or a sounding reference signal (SRS), the transmission parameter is the power control parameter, and the power control parameter comprises a path loss measurement reference signal;

   the determining, by a terminal device, a transmission parameter of an uplink signal according to a control resource set (CORESET) group index associated with the uplink signal, in response to no information to determine the transmission parameter being configured for the uplink signal comprises:

   > determining the path loss measurement reference signal of the PUCCH according to the CORESET group index associated with the PUCCH, in response to no indication information of the path loss measurement reference signal being configured for the PUCCH; or
   > determining the path loss measurement reference signal of the SRS according to the CORESET group index associated with the SRS, in response to no indication information of the path loss measurement reference signal being configured for the SRS.

7. The method according to claim 5 or 6, wherein the path loss measurement reference signal is a reference signal included in a transmission configuration indication (TCI) state of a first CORESET, and the first CORESET is a CORESET with a lowest identity (ID) in CORESETs configured with the CORESET group index.

8. The method according to any one of claims 2-7, wherein the uplink signal is transmitted in a frequency range 2.

9. The method according to claim 5, wherein the determining the path loss measurement reference signal of the uplink signal according to the CORESET group index associated with the uplink signal comprises:

   determining the path loss measurement reference signal of the uplink signal from a path loss measurement reference signal set pre-configured by a radio resource control (RRC) signaling according to the CORESET group index associated with the uplink signal.

10. The method according to claim 9, wherein the determining the path loss measurement reference signal of the uplink signal from a path loss measurement reference signal set pre-configured by a radio resource control (RRC) signaling according to the CORESET group index associated with the uplink signal comprises:

    > taking the path loss measurement reference signal with identity (ID) 0 in a first path loss measurement reference signal set pre-configured by the RRC signaling as the path loss measurement reference signal of the uplink signal, in response to the CORESET group index associated with the uplink signal being 0; and
    > taking the path loss measurement reference signal with ID 1 in the first path loss measurement reference signal set pre-configured by the RRC signaling as the path loss measurement reference signal of the uplink signal, in response to the CORESET group index associated with the uplink signal being 1.

11. The method according to claim 9, wherein the determining the path loss measurement reference signal of the uplink signal from a path loss measurement reference signal set pre-configured by a radio resource control (RRC) signaling according to the CORESET group index associated with the uplink signal comprises:

    > taking the path loss measurement reference signal with identity (ID) 0 in a first path loss measurement reference signal set pre-configured by the RRC signaling as the path loss measurement reference signal of the uplink signal, in response to the CORESET group index associated with the uplink signal being 0; and
    > taking the path loss measurement reference signal with ID 0 in a second path loss measurement reference signal set pre-configured by the RRC signaling as the path loss measurement reference signal of the uplink signal, in response to the CORESET group index associated with the uplink signal being 1.

12. The method according to claim 9, wherein the PUSCH is transmitted in a frequency range 1.

13. The method according to claim 1, wherein the uplink signal is a physical uplink shared channel (PUSCH), the transmission parameter is the power control parameter, and the power control parameter comprises a path loss measurement reference signal;

    the determining, by a terminal device, a transmission parameter of an uplink signal according to a control resource set (CORESET) group index associated with the uplink signal, in response to no information to determine the transmission parameter being configured for the uplink signal comprises:

    determining the path loss measurement reference signal of the PUSCH according to the CORESET group index associated with the PUSCH, in response to a downlink control information (DCI) scheduling the PUSCH not comprising a sounding reference signal resource indicator (SRI) and the terminal device being configured to allow an updating of the path loss measurement reference signal through a media access control control element (MAC CE).

14. The method according to claim 13, wherein the determining the path loss measurement reference signal of the PUSCH according to the CORESET group index associated with the PUSCH comprises:

    determining a reference SRI value according to the CORESET group index associated with the PUSCH; and determining the path loss measurement reference signal indicated in a power control parameter set corresponding to the reference SRI value as the path loss measurement reference signal of the PUSCH.

15. The method according to claim 14, wherein the reference SRI value is equal to a value of the CORESET group index associated with the PUSCH.

16. The method according to claim 13, wherein the determining the path loss measurement reference signal of the PUSCH according to the CORESET group index associated with the PUSCH comprises:

    determining a correspondence between an SRI value and a power control parameter set according to the CORESET group index associated with the PUSCH; and determining the path loss measurement reference signal indicated in the power control parameter set corresponding to the SRI value of 0 as the path loss measurement reference signal of the PUSCH, according to the correspondence.

17. The method according to claim 1, wherein the uplink signal is a physical uplink shared channel (PUSCH), and the transmission parameter is the power control parameter;
    the determining, by a terminal device, a transmission parameter of an uplink signal according to a control resource set (CORESET) group index associated with the uplink signal, in response to no information to determine the transmission parameter being configured for the uplink signal comprises:
    determining the power control parameter of the PUSCH according to the CORESET group index associated with the PUSCH, in response to a downlink control information (DCI) scheduling the PUSCH not comprising a sounding reference signal resource indicator (SRI), or in response to a radio resource control (RRC) signaling not configuring a power control parameter set corresponding to an SRI value.

18. The method according to claim 17, wherein the power control parameter comprises: an open-loop power control parameter, and the open-loop power control parameter comprises at least one of a target power and a path loss factor;
    the determining the power control parameter of the PUSCH according to the CORESET group index associated with the PUSCH comprises:
    determining the open-loop power control parameter of the PUSCH from an open-loop power control parameter set pre-configured by the RRC signaling according to the CORESET group index associated with the PUSCH.

19. The method according to claim 18, wherein the determining the open-loop power control parameter of the PUSCH from an open-loop power control parameter set pre-configured by the RRC signaling according to the CORESET group index associated with the PUSCH comprises:

    taking a first group of open-loop power control parameters in a first open-loop power control parameter set pre-configured by the RRC signaling as the open-loop power control parameter of the PUSCH, in response to the CORESET group index associated with the PUSCH being 0; and
    taking a second group of open-loop power control parameters in the first open-loop power control parameter set pre-configured by the RRC signaling as the open-loop power control parameter of the PUSCH, in response to the CORESET group index associated with the PUSCH being 1.

20. The method according to claim 18, wherein the determining the open-loop power control parameter of the PUSCH from an open-loop power control parameter set pre-configured by the RRC signaling according to the CORESET group index associated with the PUSCH comprises:

    taking a first group of open-loop power control parameters in a first open-loop power control parameter set pre-configured by the RRC signaling as the open-loop power control parameter of the PUSCH, in response to the CORESET group index associated with the PUSCH being 0; and
    taking a first group of open-loop power control parameters in a second open-loop power control parameter set pre-configured by the RRC signaling as the open-loop power control parameter of the PUSCH, in response to the CORESET group index associated with the PUSCH being 1.

21. The method according to claim 17, wherein the power control parameter comprises a path loss measurement reference signal;

the determining the power control parameter of the PUSCH according to the CORESET group index associated with the PUSCH comprises:

determining the path loss measurement reference signal of the PUSCH from a path loss measurement reference signal set pre-configured by the RRC signaling according to the CORESET group index associated with the PUSCH.

22. The method according to claim 21, wherein the determining the path loss measurement reference signal of the PUSCH from a path loss measurement reference signal set pre-configured by the RRC signaling according to the CORESET group index associated with the PUSCH comprises:

taking the path loss measurement reference signal with identity (ID) 0 in a first path loss measurement reference signal set pre-configured by the RRC signaling as the path loss measurement reference signal of the PUSCH, in response to the CORESET group index associated with the PUSCH being 0; and

taking the path loss measurement reference signal with ID 1 in the first path loss measurement reference signal set pre-configured by the RRC signaling as the path loss measurement reference signal of the PUSCH, in response to the CORESET group index associated with the PUSCH being 1.

23. The method according to claim 21, wherein the determining the path loss measurement reference signal of the PUSCH from a path loss measurement reference signal set pre-configured by the RRC signaling according to the CORESET group index associated with the PUSCH comprises:

taking the path loss measurement reference signal with identity (ID) 0 in a first path loss measurement reference signal set pre-configured by the RRC signaling as the path loss measurement reference signal of the PUSCH, in response to the CORESET group index associated with the PUSCH being 0; and

taking the path loss measurement reference signal with ID 0 in a second path loss measurement reference signal set pre-configured by the RRC signaling as the path loss measurement reference signal of the PUSCH, in response to the CORESET group index associated with the PUSCH being 1.

24. The method according to claim 17, wherein the power control parameter comprises a closed-loop power control adjustment state;

the determining the power control parameter of the PUSCH according to the CORESET group index associated with the PUSCH comprises:

determining that an index of the closed-loop power control adjustment state of the PUSCH is 0, in response to the CORESET group index associated with the PUSCH being 0; and

determining that the index of the closed-loop power control adjustment state of the PUSCH is 1, in response to the CORESET group index associated with the PUSCH being 1.

25. The method according to claim 1, wherein the uplink signal is a physical uplink control channel (PUCCH) or a sounding reference signal (SRS), the transmission parameter is the power control parameter, and the power control parameter comprises a closed-loop power control adjustment state;

the determining, by a terminal device, a transmission parameter of an uplink signal according to a control resource set (CORESET) group index associated with the uplink signal, in response to no information to determine the transmission parameter being configured for the uplink signal comprises:

determining the closed-loop power control adjustment state of the uplink signal according to the CORESET group index associated with the uplink signal, in response to a radio resource control (RRC) signaling not configuring spatial relation information of the uplink signal.

26. The method according to claim 25, wherein the determining the closed-loop power control adjustment state of the uplink signal according to the CORESET group index associated with the uplink signal comprises:

determining that an index of the closed-loop power control adjustment state of the uplink signal is 0, in response to the CORESET group index of the uplink signal being 0; and

determining that the index of the closed-loop power control adjustment state of the uplink signal is 1, in response to the CORESET group index of the uplink signal being 1.

27. The method according to any one of claims 1-26, wherein the transmission parameter is the power control parameter; the transmitting, by the terminal device, the uplink signal according to the transmission parameter comprises:

determining a transmission power of the uplink signal according to the power control parameter; and transmitting the uplink signal with the transmission power.

28. The method according to any one of claims 1-26, wherein the transmission parameter is the reference source signal; the transmitting, by the terminal device, the uplink signal according to the transmission parameter comprises:

determining a transmitting beam of the uplink signal according to the reference source signal; and transmitting the uplink signal with the transmitting beam.

29. A terminal device, comprising:

a processing module, configured to determine a transmission parameter of an uplink signal according to a control resource set (CORESET) group index associated with the uplink signal, in response to no information to determine the transmission parameter being configured for the uplink signal; wherein the transmission parameter is a power control parameter or a reference source signal; and a transmitting module, configured to transmit the uplink signal according to the transmission parameter.

30. The terminal device according to claim 29, wherein the uplink signal is a physical uplink shared channel (PUSCH) scheduled by downlink control information (DCI) format 0_0, and the transmission parameter is the reference source signal;
the processing module is specifically configured to determine the reference source signal of the uplink signal according to the CORESET group index associated with the uplink signal, in response to no physical uplink control channel (PUCCH) resource being configured on an activated bandwidth part (BWP) that transmits the uplink signal, or in response to no spatial relation information being configured for any PUCCH resource on the activated BWP that transmits the uplink signal.

31. The terminal device according to claim 29, wherein the uplink signal is a physical uplink control channel (PUCCH) or a sounding reference signal (SRS), and the transmission parameter is the reference source signal;

the processing module is specifically configured to determine the reference source signal of the PUCCH according to the CORESET group index associated with the PUCCH, in response to no spatial relation information being configured for the PUCCH; or
the processing module is specifically configured to determine the reference source signal of the SRS according to the CORESET group index associated with the SRS, in response to no spatial relation information being configured for the SRS.

32. The terminal device according to claim 30 or 31, wherein the reference source signal is a reference signal included in a transmission configuration indication (TCI) state of a first CORESET, and the first CORESET is a CORESET with a lowest identity (ID) in CORESETs configured with the CORESET group index.

33. The terminal device according to claim 29, wherein the uplink signal is a physical uplink shared channel (PUSCH) scheduled by downlink control information (DCI) format 0_0, the transmission parameter is the power control parameter, and the power control parameter comprises a path loss measurement reference signal;
the processing module is specifically configured to determine the path loss measurement reference signal of the uplink signal according to the CORESET group index associated with the uplink signal, in response to no physical uplink control channel (PUCCH) resource being configured on an activated bandwidth part (BWP) that transmits the uplink signal, or in response to no spatial relation information being configured for any PUCCH resource on the activated BWP that transmits the uplink signal.

34. The terminal device according to claim 29, wherein the uplink signal is a physical uplink control channel (PUCCH) or a sounding reference signal (SRS), the transmission parameter is the power control parameter, and the power control parameter comprises a path loss measurement reference signal;

the processing module is specifically configured to determine the path loss measurement reference signal of the PUCCH according to the CORESET group index associated with the PUCCH, in response to no indication information of the path loss measurement reference signal being configured for the PUCCH; or

the processing module is specifically configured to determine the path loss measurement reference signal of the SRS according to the CORESET group index associated with the SRS, in response to no indication information of the path loss measurement reference signal being configured for the SRS.

35. The terminal device according to claim 33 or 34, wherein the path loss measurement reference signal is a reference signal included in a transmission configuration indication (TCI) state of a first CORESET, and the first CORESET is a CORESET with a lowest identity (ID) in CORESETs configured with the CORESET group index.

36. The terminal device according to any one of claims 30-35, wherein the uplink signal is transmitted in a frequency range 2.

37. The terminal device according to claim 33, wherein,
the processing module is specifically configured to determine the path loss measurement reference signal of the uplink signal from a path loss measurement reference signal set pre-configured by a radio resource control (RRC) signaling according to the CORESET group index associated with the uplink signal.

38. The terminal device according to claim 37, wherein,
the processing module is specifically configured to take the path loss measurement reference signal with identity (ID) 0 in a first path loss measurement reference signal set pre-configured by the RRC signaling as the path loss measurement reference signal of the uplink signal, in response to the CORESET group index associated with the uplink signal being 0; and to take the path loss measurement reference signal with ID 1 in the first path loss measurement reference signal set pre-configured by the RRC signaling as the path loss measurement reference signal of the uplink signal, in response to the CORESET group index associated with the uplink signal being 1.

39. The terminal device according to claim 37, wherein,
the processing module is specifically configured to take the path loss measurement reference signal with identity (ID) 0 in a first path loss measurement reference signal set pre-configured by the RRC signaling as the path loss measurement reference signal of the uplink signal, in response to the CORESET group index associated with the uplink signal being 0; and to take the path loss measurement reference signal with ID 0 in a second path loss measurement reference signal set pre-configured by the RRC signaling as the path loss measurement reference signal of the uplink signal, in response to the CORESET group index associated with the uplink signal being 1.

40. The terminal device according to claim 37, wherein the PUSCH is transmitted in a frequency range 1.

41. The terminal device according to claim 29, wherein the uplink signal is a physical uplink shared channel (PUSCH), the transmission parameter is the power control parameter, and the power control parameter comprises a path loss measurement reference signal;
the processing module is specifically configured to determine the path loss measurement reference signal of the PUSCH according to the CORESET group index associated with the PUSCH, in response to a downlink control information (DCI) scheduling the PUSCH not comprising a sounding reference signal resource indicator (SRI) and the terminal device being configured to allow an updating of the path loss measurement reference signal through a media access control control element (MAC CE).

42. The terminal device according to claim 41, wherein,
the processing module is specifically configured to determine a reference SRI value according to the CORESET group index associated with the PUSCH; and to determine the path loss measurement reference signal indicated in a power control parameter set corresponding to the reference SRI value as the path loss measurement reference signal of the PUSCH.

43. The terminal device according to claim 42, wherein the reference SRI value is equal to a value of the CORESET group index associated with the PUSCH.

44. The terminal device according to claim 41, wherein,
the processing module is specifically configured to determine a correspondence between an SRI value and a power control parameter set according to the CORESET group index associated with the PUSCH; and to determine the path loss measurement reference signal indicated in the power control parameter set corresponding to the SRI value of 0 as the path loss measurement reference signal of the PUSCH, according to the correspondence.

45. The terminal device according to claim 29, wherein the uplink signal is a physical uplink shared channel (PUSCH), and the transmission parameter is the power control parameter;

the processing module is specifically configured to determine the power control parameter of the PUSCH according to the CORESET group index associated with the PUSCH, in response to a downlink control information (DCI) scheduling the PUSCH not comprising a sounding reference signal resource indicator (SRI), or in response to a radio resource control (RRC) signaling not configuring a power control parameter set corresponding to an SRI value.

46. The terminal device according to claim 45, wherein the power control parameter comprises: an open-loop power control parameter, and the open-loop power control parameter comprises at least one of a target power and a path loss factor;

the processing module is specifically configured to determine the open-loop power control parameter of the PUSCH from an open-loop power control parameter set pre-configured by the RRC signaling according to the CORESET group index associated with the PUSCH.

47. The terminal device according to claim 46, wherein,

the processing module is specifically configured to take a first group of open-loop power control parameters in a first open-loop power control parameter set pre-configured by the RRC signaling as the open-loop power control parameter of the PUSCH, in response to the CORESET group index associated with the PUSCH being 0; and to take a second group of open-loop power control parameters in the first open-loop power control parameter set pre-configured by the RRC signaling as the open-loop power control parameter of the PUSCH, in response to the CORESET group index associated with the PUSCH being 1.

48. The terminal device according to claim 46, wherein,

the processing module is specifically configured to take a first group of open-loop power control parameters in a first open-loop power control parameter set pre-configured by the RRC signaling as the open-loop power control parameter of the PUSCH, in response to the CORESET group index associated with the PUSCH being 0; and to take a first group of open-loop power control parameters in a second open-loop power control parameter set pre-configured by the RRC signaling as the open-loop power control parameter of the PUSCH, in response to the CORESET group index associated with the PUSCH being 1.

49. The terminal device according to claim 45, wherein the power control parameter comprises a path loss measurement reference signal;

the processing module is specifically configured to determine the path loss measurement reference signal of the PUSCH from a path loss measurement reference signal set pre-configured by the RRC signaling according to the CORESET group index associated with the PUSCH.

50. The terminal device according to claim 49, wherein,

the processing module is specifically configured to take the path loss measurement reference signal with identity (ID) 0 in a first path loss measurement reference signal set pre-configured by the RRC signaling as the path loss measurement reference signal of the PUSCH, in response to the CORESET group index associated with the PUSCH being 0; and to take the path loss measurement reference signal with ID 1 in the first path loss measurement reference signal set pre-configured by the RRC signaling as the path loss measurement reference signal of the PUSCH, in response to the CORESET group index associated with the PUSCH being 1.

51. The terminal device according to claim 49, wherein,

the processing module is specifically configured to take the path loss measurement reference signal with identity (ID) 0 in a first path loss measurement reference signal set pre-configured by the RRC signaling as the path loss measurement reference signal of the PUSCH, in response to the CORESET group index associated with the PUSCH being 0; and to take the path loss measurement reference signal with ID 0 in a second path loss measurement reference signal set pre-configured by the RRC signaling as the path loss measurement reference signal of the PUSCH, in response to the CORESET group index associated with the PUSCH being 1.

52. The terminal device according to claim 45, wherein the power control parameter comprises a closed-loop power control adjustment state;

the processing module is specifically configured to determine that an index of the closed-loop power control adjustment state of the PUSCH is 0, in response to the CORESET group index associated with the PUSCH being 0; and to determine that the index of the closed-loop power control adjustment state of the PUSCH is 1, in response to the CORESET group index associated with the PUSCH being 1.

53. The terminal device according to claim 29, wherein the uplink signal is a physical uplink control channel (PUCCH) or a sounding reference signal (SRS), the transmission parameter is the power control parameter, and the power control parameter comprises a closed-loop power control adjustment state;
the processing module is specifically configured to determine the closed-loop power control adjustment state of the uplink signal according to the CORESET group index associated with the uplink signal, in response to a radio resource control (RRC) signaling not configuring spatial relation information of the uplink signal.

54. The terminal device according to claim 53, wherein the processing module is specifically configured to determine that an index of the closed-loop power control adjustment state of the uplink signal is 0, in response to the CORESET group index of the uplink signal being 0; and to determine that the index of the closed-loop power control adjustment state of the uplink signal is 1, in response to the CORESET group index of the uplink signal being 1.

55. The terminal device according to any one of claims 29-55, wherein the transmission parameter is the power control parameter;
the transmitting module is specifically configured to determine a transmission power of the uplink signal according to the power control parameter; and to transmit the uplink signal with the transmission power.

56. The terminal device according to any one of claims 29-55, wherein the transmission parameter is the reference source signal;
the transmitting module is specifically configured to determine a transmitting beam of the uplink signal according to the reference source signal; and to transmit the uplink signal with the transmitting beam.

57. A terminal device, comprising:

a processor, configured to determine a transmission parameter of an uplink signal according to a control resource set (CORESET) group index associated with the uplink signal, in response to no information to determine the transmission parameter being configured for the uplink signal; wherein the transmission parameter is a power control parameter or a reference source signal; and
a transmitter, configured to transmit the uplink signal according to the transmission parameter.

58. The terminal device according to claim 57, wherein the uplink signal is a physical uplink shared channel (PUSCH) scheduled by downlink control information (DCI) format 0_0, and the transmission parameter is the reference source signal;
the processor is specifically configured to determine the reference source signal of the uplink signal according to the CORESET group index associated with the uplink signal, in response to no physical uplink control channel (PUCCH) resource being configured on an activated bandwidth part (BWP) that transmits the uplink signal, or in response to no spatial relation information being configured for any PUCCH resource on the activated BWP that transmits the uplink signal.

59. The terminal device according to claim 57, wherein the uplink signal is a physical uplink control channel (PUCCH) or a sounding reference signal (SRS), and the transmission parameter is the reference source signal;

the processor is specifically configured to determine the reference source signal of the PUCCH according to the CORESET group index associated with the PUCCH, in response to no spatial relation information being configured for the PUCCH; or
the processor is specifically configured to determine the reference source signal of the SRS according to the CORESET group index associated with the SRS, in response to no spatial relation information being configured for the SRS.

60. The terminal device according to claim 58 or 59, wherein the reference source signal is a reference signal included in a transmission configuration indication (TCI) state of a first CORESET, and the first CORESET is a CORESET with a lowest identity (ID) in CORESETs configured with the CORESET group index.

61. The terminal device according to claim 57, wherein the uplink signal is a physical uplink shared channel (PUSCH) scheduled by downlink control information (DCI) format 0_0, the transmission parameter is the power control parameter, and the power control parameter comprises a path loss measurement reference signal;
the processor is specifically configured to determine the path loss measurement reference signal of the uplink signal according to the CORESET group index associated with the uplink signal, in response to no physical uplink control channel (PUCCH) resource being configured on an activated bandwidth part (BWP) that transmits the uplink signal, or in response to no spatial relation information being configured for any PUCCH resource on the activated BWP that transmits the uplink signal.

62. The terminal device according to claim 57, wherein the uplink signal is a physical uplink control channel (PUCCH) or a sounding reference signal (SRS), the transmission parameter is the power control parameter, and the power control parameter comprises a path loss measurement reference signal;

the processor is specifically configured to determine the path loss measurement reference signal of the PUCCH according to the CORESET group index associated with the PUCCH, in response to no indication information of the path loss measurement reference signal being configured for the PUCCH; or
the processor is specifically configured to determine the path loss measurement reference signal of the SRS according to the CORESET group index associated with the SRS, in response to no indication information of the path loss measurement reference signal being configured for the SRS.

63. The terminal device according to claim 61 or 62, wherein the path loss measurement reference signal is a reference signal included in a transmission configuration indication (TCI) state of a first CORESET, and the first CORESET is a CORESET with a lowest identity (ID) in CORESETs configured with the CORESET group index.

64. The terminal device according to any one of claims 58-63, wherein the uplink signal is transmitted in a frequency range 2.

65. The terminal device according to claim 61, wherein,
the processor is specifically configured to determine the path loss measurement reference signal of the uplink signal from a path loss measurement reference signal set pre-configured by a radio resource control (RRC) signaling according to the CORESET group index associated with the uplink signal.

66. The terminal device according to claim 65, wherein,
the processor is specifically configured to take the path loss measurement reference signal with identity (ID) 0 in a first path loss measurement reference signal set pre-configured by the RRC signaling as the path loss measurement reference signal of the uplink signal, in response to the CORESET group index associated with the uplink signal being 0; and to take the path loss measurement reference signal with ID 1 in the first path loss measurement reference signal set pre-configured by the RRC signaling as the path loss measurement reference signal of the uplink signal, in response to the CORESET group index associated with the uplink signal being 1.

67. The terminal device according to claim 65, wherein,
the processor is specifically configured to take the path loss measurement reference signal with identity (ID) 0 in a first path loss measurement reference signal set pre-configured by the RRC signaling as the path loss measurement reference signal of the uplink signal, in response to the CORESET group index associated with the uplink signal being 0; and to take the path loss measurement reference signal with ID 0 in a second path loss measurement reference signal set pre-configured by the RRC signaling as the path loss measurement reference signal of the uplink signal, in response to the CORESET group index associated with the uplink signal being 1.

68. The terminal device according to claim 65, wherein the PUSCH is transmitted in a frequency range 1.

69. The terminal device according to claim 57, wherein the uplink signal is a physical uplink shared channel (PUSCH), the transmission parameter is the power control parameter, and the power control parameter comprises a path loss measurement reference signal;
the processor is specifically configured to determine the path loss measurement reference signal of the PUSCH according to the CORESET group index associated with the PUSCH, in response to a downlink control information (DCI) scheduling the PUSCH not comprising a sounding reference signal resource indicator (SRI) and the terminal device being configured to allow an updating of the path loss measurement reference signal through a media access control control element (MAC CE).

**70.** The terminal device according to claim 69, wherein,
the processor is specifically configured to determine a reference SRI value according to the CORESET group index associated with the PUSCH; and to determine the path loss measurement reference signal indicated in a power control parameter set corresponding to the reference SRI value as the path loss measurement reference signal of the PUSCH.

**71.** The terminal device according to claim 70, wherein the reference SRI value is equal to a value of the CORESET group index associated with the PUSCH.

**72.** The terminal device according to claim 71, wherein,
the processor is specifically configured to determine a correspondence between an SRI value and a power control parameter set according to the CORESET group index associated with the PUSCH; and to determine the path loss measurement reference signal indicated in the power control parameter set corresponding to the SRI value of 0 as the path loss measurement reference signal of the PUSCH, according to the correspondence.

**73.** The terminal device according to claim 57, wherein the uplink signal is a physical uplink shared channel (PUSCH), and the transmission parameter is the power control parameter;
the processor is specifically configured to determine the power control parameter of the PUSCH according to the CORESET group index associated with the PUSCH, in response to a downlink control information (DCI) scheduling the PUSCH not comprising a sounding reference signal resource indicator (SRI), or in response to a radio resource control (RRC) signaling not configuring a power control parameter set corresponding to an SRI value.

**74.** The terminal device according to claim 73, wherein the power control parameter comprises: an open-loop power control parameter, and the open-loop power control parameter comprises at least one of a target power and a path loss factor;
the processor is specifically configured to determine the open-loop power control parameter of the PUSCH from an open-loop power control parameter set pre-configured by the RRC signaling according to the CORESET group index associated with the PUSCH.

**75.** The terminal device according to claim 74, wherein,
the processor is specifically configured to take a first group of open-loop power control parameters in a first open-loop power control parameter set pre-configured by the RRC signaling as the open-loop power control parameter of the PUSCH, in response to the CORESET group index associated with the PUSCH being 0; and to take a second group of open-loop power control parameters in the first open-loop power control parameter set pre-configured by the RRC signaling as the open-loop power control parameter of the PUSCH, in response to the CORESET group index associated with the PUSCH being 1.

**76.** The terminal device according to claim 74, wherein,
the processor is specifically configured to take a first group of open-loop power control parameters in a first open-loop power control parameter set pre-configured by the RRC signaling as the open-loop power control parameter of the PUSCH, in response to the CORESET group index associated with the PUSCH being 0; and to take a first group of open-loop power control parameters in a second open-loop power control parameter set pre-configured by the RRC signaling as the open-loop power control parameter of the PUSCH, in response to the CORESET group index associated with the PUSCH being 1.

**77.** The terminal device according to claim 73, wherein the power control parameter comprises a path loss measurement reference signal;
the processor is specifically configured to determine the path loss measurement reference signal of the PUSCH from a path loss measurement reference signal set pre-configured by the RRC signaling according to the CORESET group index associated with the PUSCH.

**78.** The terminal device according to claim 77, wherein,
the processor is specifically configured to take the path loss measurement reference signal with identity (ID) 0 in a first path loss measurement reference signal set pre-configured by the RRC signaling as the path loss measurement reference signal of the PUSCH, in response to the CORESET group index associated with the PUSCH being 0; and to take the path loss measurement reference signal with ID 1 in the first path loss measurement reference signal set pre-configured by the RRC signaling as the path loss measurement reference signal of the PUSCH, in response to the CORESET group index associated with the PUSCH being 1.

**79.** The terminal device according to claim 77, wherein,
the processor is specifically configured to take the path loss measurement reference signal with identity (ID) 0 in a first path loss measurement reference signal set pre-configured by the RRC signaling as the path loss measurement reference signal of the PUSCH, in response to the CORESET group index associated with the PUSCH being 0; and to take the path loss measurement reference signal with ID 0 in a second path loss measurement reference signal set pre-configured by the RRC signaling as the path loss measurement reference signal of the PUSCH, in response to the CORESET group index associated with the PUSCH being 1.

**80.** The terminal device according to claim 73, wherein the power control parameter comprises a closed-loop power control adjustment state;
the processor is specifically configured to determine that an index of the closed-loop power control adjustment state of the PUSCH is 0, in response to the CORESET group index associated with the PUSCH being 0; and to determine that the index of the closed-loop power control adjustment state of the PUSCH is 1, in response to the CORESET group index associated with the PUSCH being 1.

**81.** The terminal device according to claim 73, wherein the uplink signal is a physical uplink control channel (PUCCH) or a sounding reference signal (SRS), the transmission parameter is the power control parameter, and the power control parameter comprises a closed-loop power control adjustment state;
the processor is specifically configured to determine the closed-loop power control adjustment state of the uplink signal according to the CORESET group index associated with the uplink signal, in response to a radio resource control (RRC) signaling not configuring spatial relation information of the uplink signal.

**82.** The terminal device according to claim 81, wherein the processor is specifically configured to determine that an index of the closed-loop power control adjustment state of the uplink signal is 0, in response to the CORESET group index of the uplink signal being 0; and to determine that the index of the closed-loop power control adjustment state of the uplink signal is 1, in response to the CORESET group index of the uplink signal being 1.

**83.** The terminal device according to any one of claims 57-82, wherein the transmission parameter is the power control parameter;
the transmitter is specifically configured to determine a transmission power of the uplink signal according to the power control parameter; and to transmit the uplink signal with the transmission power.

**84.** The terminal device according to any one of claims 57-82, wherein the transmission parameter is the reference source signal;
the transmitter is specifically configured to determine a transmitting beam of the uplink signal according to the reference source signal; and to transmit the uplink signal with the transmitting beam.

**85.** A computer-readable storage medium, comprising an instruction; wherein the instruction is executable on a computer to cause the computer to perform the method according to any one of claims 1-28.

Resource selection based
on reception quality

Next-generation
station gNB

Configuring K
SRS resources

SRI

N SRS
resources

K SRS
resources

PUSCH/P
UCCH

UE

FIG. 1

RRC

N candidate TCI states

MAC

K activated TCI states

DCI

1/2 used TCI states

FIG. 2

FIG. 3

FIG. 4

FIG. 5

| |
|---|
| determining, by the terminal device, a transmission parameter of a PUSCH scheduled by DCI format 0_0 according to a CORESET group index associated with the PUSCH scheduled by the DCI format 0_0, in response to the PUSCH scheduled by the DCI format 0_0 not being configured with information to determine the transmission parameter; the transmission parameter is a power control parameter or a reference source signal |

601

| |
|---|
| transmitting, by the terminal device, the uplink signal according to the transmission parameter |

602

FIG. 6

| |
|---|
| determining, by the terminal device, a transmission parameter of an uplink signal according to a CORESET group index associated with the uplink signal, in response to no information to determine the transmission parameter being configured for the uplink signal; the transmission parameter is a power control parameter or a reference source signal |

701

| |
|---|
| transmitting, by the terminal device, the PUCCH or SRS according to the transmission parameter |

702

FIG. 7

determining, by the terminal device, the path loss measurement reference signal of the PUSCH according to a CORESET group index associated with the PUSCH, in response to a DCI scheduling the PUSCH not including a sounding reference signal resource indicator (SRI) and the terminal device being configured to allow updating of the path loss measurement reference signal through a media access control control element (MAC CE)   801

transmitting, by the terminal device, the PUSCH according to the path loss measurement reference signal of the PUSCH   802

FIG. 8

determining, by the terminal device, the open-loop power control parameter of the PUSCH from an open-loop power control parameter set pre-configured by the RRC signaling according to the CORESET group index associated with the PUSCH, in response to a DCI scheduling the PUSCH not including an SRI, or in response to the RRC signaling not configuring the power control parameter set corresponding to an SRI value   901

transmitting, by the terminal device, the PUSCH according to the open-loop power control parameter   902

FIG. 9

determining, by the terminal device, the path loss measurement reference signal of the PUSCH from a path loss measurement reference signal set pre-configured by the RRC signaling according to a CORESET group index associated with the PUSCH, in response to a DCI scheduling the PUSCH not including an SRI, or in response to the RRC signaling not configuring the power control parameter set corresponding to an SRI value   1001

transmitting, by the terminal device, the PUSCH according to the path loss measurement reference signal   1002

FIG. 10

determining, by the terminal device, the closed-loop power control adjustment state of the PUSCH according to the CORESET group index associated with the PUSCH, in response to a DCI scheduling the PUSCH not including an SRI, or in response to the RRC signaling not configuring a power control parameter set corresponding to an SRI value ⌐ 1101

transmitting, by the terminal device, the PUSCH according to the closed-loop power control adjustment state ⌐ 1102

FIG. 11

determining, by the terminal device, the closed-loop power control adjustment state of the uplink signal according to the CORESET group index associated with the uplink signal, in response to an RRC signaling not configuring spatial relation information of the uplink signal ⌐ 1201

transmitting, by the terminal device transmits the PUCCH or SRS according to the closed-loop power control adjustment state ⌐ 1202

FIG. 12

## Terminal device

| Processing module 1301 | Transmitting module 1302 |

FIG. 13

FIG. 14

## INTERNATIONAL SEARCH REPORT

| International application No. |
|---|
| **PCT/CN2020/078674** |

**A.    CLASSIFICATION OF SUBJECT MATTER**

H04W 72/04(2009.01)i

According to International Patent Classification (IPC) or to both national classification and IPC

**B.    FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 上行, 配置, 传输, 参数, 功率控制, 参考信号, 路损测量, 空间相关信息, PUCCH, PUSCH, power control, RS, CORESET, DCI, pathloss, SpatialRelation, enableDefaultBeamPlForPUSCH, PUSCH-PathlossReferenceRS, not provided RS, CORESET with the lowest index

**C.    DOCUMENTS CONSIDERED TO BE RELEVANT**

| Category* | Citation of document, with indication, where appropriate, of the relevant passages | Relevant to claim No. |
|---|---|---|
| X | LG ElECTRONICS. "Outcome of email thread [100e-NR-eMIMO-MB-03]" *3GPP TSG RAN WG1 #100 R1-2001261*, 06 March 2020 (2020-03-06), full text, sections 2-4 | 1-85 |
| X | HUAWEI et al. "Remaining issues on R16 MIMO" *3GPP TSG RAN WG1 Meeting #100-e R1-2001103*, 06 March 2020 (2020-03-06), full text, sections 1-2 | 1-85 |
| X | NOKIA et al. "Maintenance of Rel-16 Beam Management" *3GPP TSG RAN WG1 #100 R1-2000989*, 06 March 2020 (2020-03-06), full text, sections 1-2 | 1-85 |
| X | ZTE. "Maintenance of enhancements on multi-beam operation" *3GPP TSG RAN WG1 Meeting #100-e R1-2000240*, 06 March 2020 (2020-03-06), full text, section 2 | 1-85 |
| A | CN 110351052 A (VIVO COMMUNICATION TECHNOLOGY CO., LTD.) 18 October 2019 (2019-10-18) entire document | 1-85 |

[✓] Further documents are listed in the continuation of Box C.          [✓]  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 November 2020** | **09 December 2020** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/078674**

### C. DOCUMENTS CONSIDERED TO BE RELEVANT

| Category* | Citation of document, with indication, where appropriate, of the relevant passages | Relevant to claim No. |
|---|---|---|
| A | CN 110535614 A (ZTE CORPORATION) 03 December 2019 (2019-12-03)<br>entire document | 1-85 |
| A | CN 110475360 A (ASUSTEK COMPUTER INC.) 19 November 2019 (2019-11-19)<br>entire document | 1-85 |
| A | EP 3592082 A1 (LG ELECTRONICS INC.) 08 January 2020 (2020-01-08)<br>entire document | 1-85 |

Form PCT/ISA/210 (second sheet) (January 2015)

<div align="center">

**INTERNATIONAL SEARCH REPORT**
**Information on patent family members**

</div>

International application No.

**PCT/CN2020/078674**

| Patent document cited in search report | | | Publication date (day/month/year) | Patent family member(s) | | | Publication date (day/month/year) |
|---|---|---|---|---|---|---|---|
| CN | 110351052 | A | 18 October 2019 | WO | 2019192385 | A1 | 10 October 2019 |
| CN | 110535614 | A | 03 December 2019 | | None | | |
| CN | 110475360 | A | 19 November 2019 | EP | 3567967 | A1 | 13 November 2019 |
| | | | | US | 2019349964 | A1 | 14 November 2019 |
| EP | 3592082 | A1 | 08 January 2020 | WO | 2019216654 | A1 | 14 November 2019 |
| | | | | CN | 110710308 | A | 17 January 2020 |
| | | | | US | 2020178239 | A1 | 04 June 2020 |
| | | | | KR | 20190129749 | A | 20 November 2019 |
| | | | | TW | 202014023 | A | 01 April 2020 |

Form PCT/ISA/210 (patent family annex) (January 2015)